# EUROPEAN PATENT APPLICATION

(11) **EP 4 741 990 A1**
(43) Date of publication of application: **13.05.2026**
(21) Application number: 24882631.5
(22) Date of filing: 02.09.2024
(51) Int. Cl.: G06F 1/16, G06V 40/13, H04M 1/23, H04M 1/02

(54) **ELECTRONIC DEVICE COMPRISING FOLDABLE HOUSING**

(30) Priority: 25.10.2023 KR 20230144124; 03.11.2023 KR 20230151241; 08.12.2023 KR 20230177722; 08.12.2023 KR 20230177723; 17.07.2024 WO PCT/KR2024/010319
(71) Applicant: Samsung Electronics Co., Ltd., Suwon-si, Gyeonggi-do 16677 (KR)
(72) Inventor: JUNG, Soli, Suwon-si Gyeonggi-do 16677 (KR); KANG, Jeongho, Suwon-si Gyeonggi-do 16677 (KR); KIM, Namwoo, Suwon-si Gyeonggi-do 16677 (KR); KIM, Minho, Suwon-si Gyeonggi-do 16677 (KR); PARK, Changi, Suwon-si Gyeonggi-do 16677 (KR); AHN, Jaeuk, Suwon-si Gyeonggi-do 16677 (KR); YOON, Yeonggyu, Suwon-si Gyeonggi-do 16677 (KR); CHOI, Junyoung, Suwon-si Gyeonggi-do 16677 (KR); HONG, Hyunchul, Suwon-si Gyeonggi-do 16677 (KR); YOON, Byounguk, Suwon-si Gyeonggi-do 16677 (KR)
(74) Representative: Appleyard Lees IP LLP
(86) International application number: PCT/KR2024/013195
(87) International publication number: WO 2025/089602

(57) **Abstract**

An electronic device according to an embodiment includes a foldable housing including a first housing, a second housing, and a third housing; a flexible display; a first hinge assembly rotatably connecting the first housing with the second housing; a second hinge assembly rotatably connecting the second housing with the third housing; a first hinge cover surrounding the first hinge assembly; and a second hinge cover surrounding the second hinge assembly.

## Description

### [Technical Field]

The present disclosure relates to an electronic device including a foldable housing.

### [Background Art]

An electronic device may include a foldable housing and a flexible display to provide an improved user experience. For example, the foldable housing may include a plurality of housings. The foldable housing may have a structure in which the plurality of housings may be folded or unfolded more than once. For example, the foldable housing may include three housings rotatably coupled through two hinges. The flexible display may be at least partially modified based on an operation of the foldable housing.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

The present disclosure is presented in the attached claims, and drawings and their respective descriptions relate to advantageous embodiments of the present disclosure.

An electronic device is provided. The electronic device may comprise a foldable housing including a first housing having a first width, a second housing having a second width narrower than the first width, and a third housing having a third width narrower than the second width. The electronic device may comprise a flexible display supported by the first housing, the second housing, and the third housing. The electronic device may comprise a first hinge assembly rotatably connecting the first housing and the second housing to each other. The electronic device may comprise a second hinge assembly rotatably connecting the second housing and the third housing to each other. The electronic device may comprise a first hinge cover, having a fourth width, at least partially covering the first hinge assembly. The electronic device may comprise a second hinge cover, having a fifth width narrower than the fourth width, at least partially covering the second hinge assembly.

An electronic device is provided. The electronic device may comprise a foldable housing including a first housing, a second housing, and a third housing. The electronic device may comprise a flexible display supported by the first housing, the second housing, and the third housing. The electronic device may comprise a first hinge assembly rotatably connecting the first housing and the second housing. The electronic device may comprise a second hinge assembly rotatably connecting the second housing and the third housing. The electronic device may comprise a first hinge cover surrounding the first hinge assembly. The electronic device may comprise a second hinge cover surrounding the second hinge assembly. When the electronic device is in a folded state, a step may be formed between the first housing and the second hinge cover.

### [Description of the Drawings]

FIG. 1 is a block diagram of an electronic device in a network environment according to an embodiment.
FIG. 2A illustrates an unfolded state of an electronic device according to an embodiment.
FIG. 2B illustrates a folded state of an electronic device according to an embodiment.
FIG. 2C illustrates a flexible display and protection frames of an electronic device according to an embodiment.
FIG. 3A illustrates a process in which an electronic device is transformed from an unfolded state to a folded state, according to an embodiment.
FIG. 3B is a cross-sectional view of an electronic device cut along line A-A' of FIG. 3B, according to an embodiment.
FIG. 4A is a cross-sectional view of an electronic device cut along line B-B' of FIG. 3B, according to an embodiment.
FIG. 4B schematically illustrates an operation of an electronic device according to a comparative example.
FIG. 4C schematically illustrates an operation of an electronic device according to an embodiment.
FIG. 5A illustrates a flexible display, a first hinge structure, and a second hinge structure in a folded state.
FIG. 5B schematically illustrates examples of a first deformable area in a folded state.
FIG. 6 illustrates a flexible display and a first hinge structure of an electronic device according to an embodiment.
FIG. 7A illustrates a flexible display and a second hinge structure of an electronic device according to an embodiment.
FIG. 7B is a diagram for comparing a folded structure of a second area.
FIG. 8A is an enlarged view of a first deformable area and a second deformable area.
FIG. 8B illustrates an electronic device according to an embodiment and an electronic device according to a comparative example.
FIG. 9A is a cross-sectional view of an electronic device according to an embodiment including a second deformable area in an unfolded state.
FIG. 9B is a cross-sectional view of an electronic device according to an embodiment including a second deformable area in a folded state.
FIG. 10A is a perspective view of an electronic device according to an embodiment.
FIG. 10B illustrates an electronic device according to a comparative example.
FIG. 11 illustrates an electronic device according to an embodiment in a folded state.
FIG. 12A illustrates a portion of an electronic device according to an embodiment.
FIG. 12B illustrates a portion of an electronic device according to a comparative example.
FIGS. 13A and 13B partially illustrate a first hinge assembly, a flexible display, and a third housing of an electronic device according to an embodiment.
FIG. 14A illustrates a portion of an electronic device according to an embodiment.
FIG. 14B illustrates a portion of an electronic device according to a comparative example.
FIG. 15A is a diagram illustrating usability of at least one key button or a fingerprint recognition part of an electronic device, according to a width of a first housing.
FIG. 15B is a diagram illustrating ease of an unfolding operation of an electronic device, according to a width of a first housing.
FIG. 16A illustrates a foldable housing of an electronic device according to an embodiment.
FIG. 16B is a diagram illustrating radiation performance of an antenna of an electronic device, according to a width of a first housing.
FIGS. 17A and 17B illustrate an electronic device according to an embodiment for improving usability of at least one key button or a fingerprint recognition part.
FIGS. 18A and 18B illustrate an electronic device according to an embodiment for improving ease of an unfolding operation.
FIG. 19 illustrates an electronic device according to an embodiment for improving radiation performance of an antenna of an electronic device.
FIGS. 20A, 20B, and 20C illustrate an electronic device according to an embodiment for improving radiation performance of an antenna of an electronic device.
FIG. 21 illustrates an electronic device according to an embodiment in an unfolded state.

### [Mode for Invention]

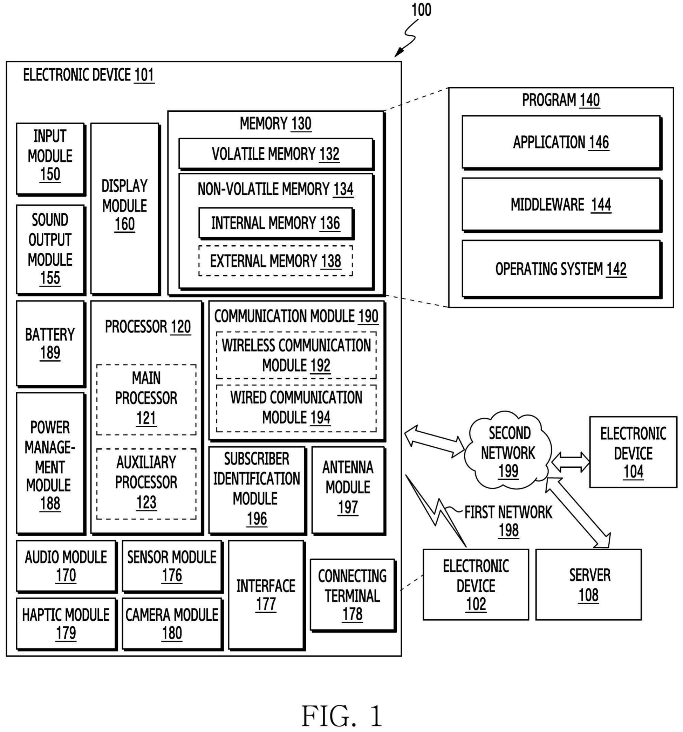

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the present disclosure, relative terms such as "above", "below", "a side", "another side", "an end", and "another end" may be used to describe a relative positional relationship between components rather than indicating absolute positions of the components. For example, when the electronic device 101 illustrated in a drawing is flipped, "above" and "below" may be switched with each other. For example, when the electronic device 101 illustrated in a drawing is flipped, "an end" and "another end" may be switched with each other.

In the present disclosure, a rotation may be referred to as a folded or unfolded operation of a foldable housing 201. For example, "a component is rotated with respect to another component" may be referred to as an operation in which the component is folded or unfolded with respect to the other component.

Hereinafter, an example of the electronic device 101 described above will be described. In the present disclosure, relative terms such as "above", "below", "a side", and/or "another side" may be used to describe a relative positional relationship between components, rather than indicating absolute positions of components. For example, when the electronic device 101 illustrated in a drawing is flipped, "above" and "below" may be switched with each other.

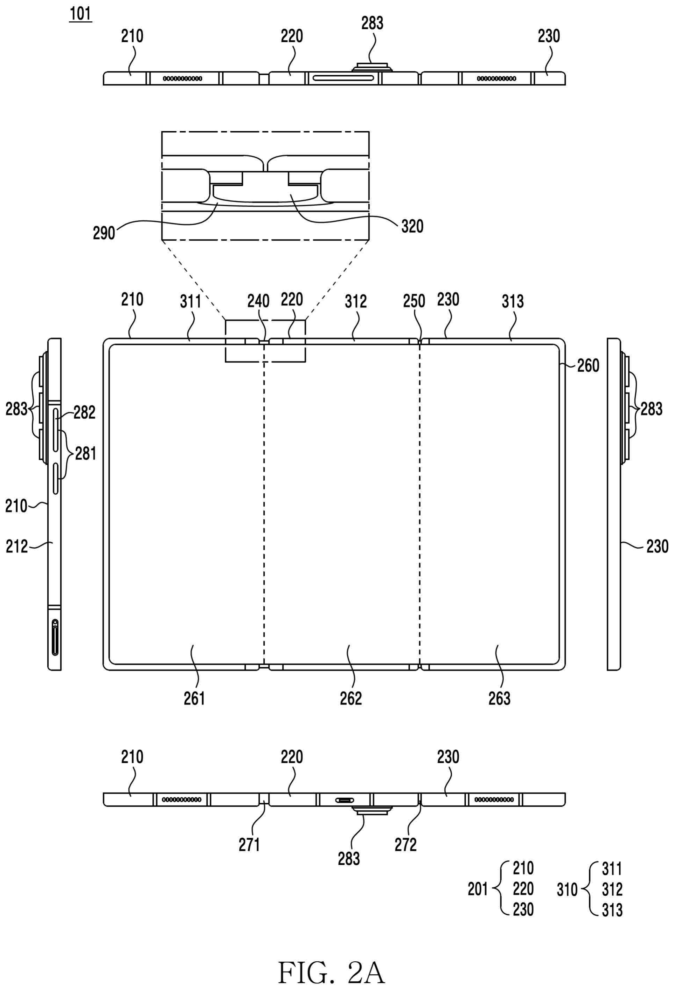

In the present disclosure, a rotation may be referred to as a folded or unfolded operation of a foldable housing (e.g., a foldable housing 201 of FIG. 2A). For example, "a component is rotated with respect to another component" may be referred to as an operation in which the component is folded or unfolded with respect to the other component.

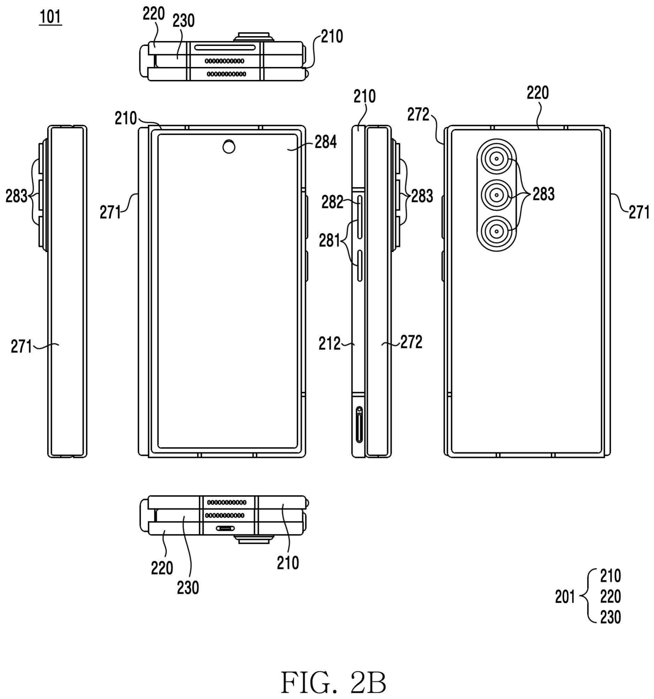

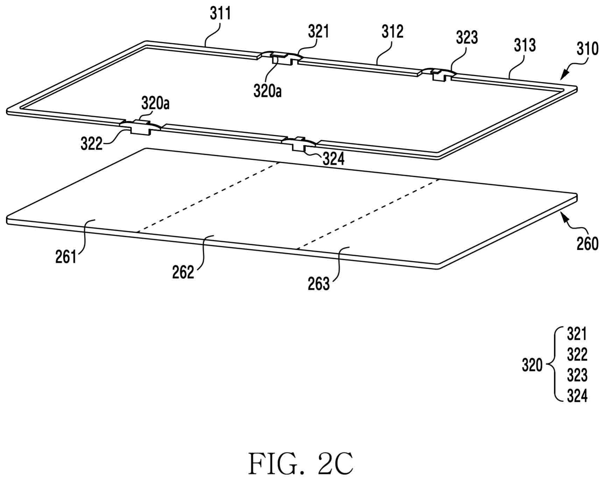

FIG. 2A illustrates an unfolded state of an electronic device according to an embodiment. FIG. 2B illustrates a folded state of an electronic device according to an embodiment. FIG. 2C illustrates a flexible display and protection frames of an electronic device according to an embodiment.

Referring to FIG. 2A, an electronic device 101 according to an embodiment may include a foldable housing 201, a first hinge assembly 240, a second hinge assembly 250, and a flexible display 260.

According to an embodiment, the foldable housing 201 may be deformable. For example, the foldable housing 201 may include a first housing 210, a second housing 220, and a third housing 230, which are rotatably connected. The second housing 220 may be disposed between the first housing 210 and the third housing 230, in an unfolded state of the electronic device 101. For example, a side of the first housing 210 may be rotatably connected to a side of the second housing 220. For example, a side of the third housing 230 may be rotatably connected to another side of the second housing 220 opposite to the side of the second housing 220. The foldable housing 201 may be referred to as a multi-foldable housing, in terms of including the first housing 210, the second housing 220, and the third housing 230, which are rotatably connected. In the present disclosure, the foldable housing 201 is described in a structure including the first housing 210, the second housing 220, and the third housing 230, but is not limited thereto. For example, the foldable housing 201 may include four or more housings.

According to an embodiment, the electronic device 101 may include hinge assemblies 240 and 250 for deformation of the foldable housing 201. For example, the electronic device 101 may include a first hinge assembly 240 and a second hinge assembly 250. The first hinge assembly 240 may rotatably connect the first housing 210 and the second housing 220. The first hinge assembly 240 may be disposed between the first housing 210 and the second housing 220. The second hinge assembly 250 may rotatably connect the second housing 220 and the third housing 230. The second hinge assembly 250 may be disposed between the second housing 220 and the third housing 230.

According to an embodiment, the foldable housing 201 may have a structure capable of being folded twice by the first hinge assembly 240 and the second hinge assembly 250. The first hinge assembly 240 and the second hinge assembly 250 may include a structure (e.g., linked gears) for providing a folding or unfolding operation of the foldable housing 201. According to an embodiment, the electronic device 101 may include a first hinge cover 271 for covering the first hinge assembly 240 and a second hinge cover 272 for covering the second hinge assembly 250. At least a portion of the first hinge assembly 240 may be accommodated in the first hinge cover 271. At least a portion of the second hinge assembly 250 may be accommodated in the second hinge cover 272.

According to an embodiment, a width of the first hinge assembly 240 may be wider than a width of the second hinge assembly 250. As illustrated in FIG. 2B, in a folded state of the electronic device 101, since the third housing 230 is located between the first housing 210 and the second housing 220, the first hinge assembly 240 may have a relatively large width, in order to provide a space where the third housing 230 is located. Since the width of the first hinge assembly 240 is wider than the width of the second hinge assembly 250, a width of the second hinge cover 272 may be wider than a width of the first hinge cover 271. Since the width of the first hinge cover 271 and the width of the second hinge cover 272 are different, extent to which the first hinge cover 271 and the second hinge cover 272 are exposed to the outside may be different in a first state. Referring to FIG. 2A, the second hinge cover 272 may be substantially covered by the second housing 220 and the third housing 230, in an unfolded state. For example, the second hinge cover 272 having a relatively small width may not be visible, in the unfolded state. For example, at least a portion of the first hinge cover 271 having a relatively large width may be exposed between the first housing 210 and the second housing 220, in the unfolded state. For example, the first hinge cover 271 having a relatively large width may be visible, in the unfolded state. In the unfolded state of the electronic device 101, the first hinge cover 271 may be exposed between the first housing 210 and the second housing 220, and the second hinge cover 272 may be substantially covered by the second housing 220 and the third housing 230. For example, in the unfolded state of the electronic device 101, a length of the first hinge cover 271 exposed to the outside may be about 2.58 mm, and a length of the second hinge cover 272 exposed to the outside may be about 0.10 mm. However, the length described above is merely illustrative and embodiments are not limited thereto.

According to an embodiment, the flexible display 260 may be disposed on the foldable housing 201. The flexible display 260 may be configured to display visual information.

According to an embodiment, the flexible display 260 may include a first display area 261, a second display area 262, and a third display area 263. For example, the first display area 261 may be a portion of the flexible display 260 disposed on the first housing 210, in the unfolded state. For example, the second display area 262 may be a portion of the flexible display 260 disposed on the second housing 220, in the unfolded state. For example, the third display area 263 may be a portion of the flexible display 260 disposed on the third housing 230, in the unfolded state.

According to an embodiment, the first display area 261, the second display area 262, and the third display area 263 may be distinguished, in order to provide visual information displayed on the flexible display 260 in various ways. Visual information displayed through the flexible display 260 may be provided independently according to the first display area 261, the second display area 262, and the third display area 263. For example, the flexible display 260 may be controlled so that the first display area 261, the second display area 262, and the third display area 263 provide one visual information as a whole. For example, the flexible display 260 may be controlled so that the first display area 261, the second display area 262, and the third display area 263 provide different visual information. For example, two of the first display area 261, the second display area 262, and the third display area 263 may be controlled to provide one visual information, and other one may be controlled to provide other visual information independently.

According to an embodiment, when the foldable housing 201 is folded or unfolded, a portion of the flexible display 260 may also be folded or unfolded. A deformable structure of the flexible display 260 according to a state of the electronic device 101 will be described later.

Referring to FIGS. 2A and 2C, the electronic device 101 according to an embodiment may include protection frames 310 for protecting an edge of the flexible display 260. For example, the protection frames 310 may include a first frame 311 surrounding at least a portion of an edge of the first display area 261, a second frame 312 surrounding at least a portion of an edge of the second display area 262, and a third frame 313 surrounding at least a portion of an edge of the third display area 263. Since a portion of the flexible display 260 may be deformed, the first frame 311 and the third frame 313 may be spaced apart from the second frame 312. For example, a first gap between the first frame 311 and the second frame 312 may be greater than a second gap between the second frame 312 and the third frame 313. For example, the first gap may be about 14.0 mm, and the second gap may be about 8.9 mm, but is not limited thereto.

The electronic device 101 according to an embodiment may include a cap 320 and/or a cover (e.g., a cover 290 of FIG. 2A) to reduce the inflow of foreign substances (e.g., dust) between the protection frames 310. The cover 290 may reduce the inflow of foreign substances by filling a gap between the protection frames 310. The cap 320 may support the cover 290 so that the cover 290 may be fixed between the protection frames 310.

According to an embodiment, the electronic device 101 may include one or more cameras 283 disposed in the foldable housing 201. For example, the cameras 283 may be disposed inside the foldable housing 201 to face an opposite side of the flexible display 260. For example, the cameras 283 may be disposed inside the second housing 220. Although not illustrated, the electronic device 101 may further include a camera disposed under the flexible display 260 and facing a direction in which the flexible display 260 faces.

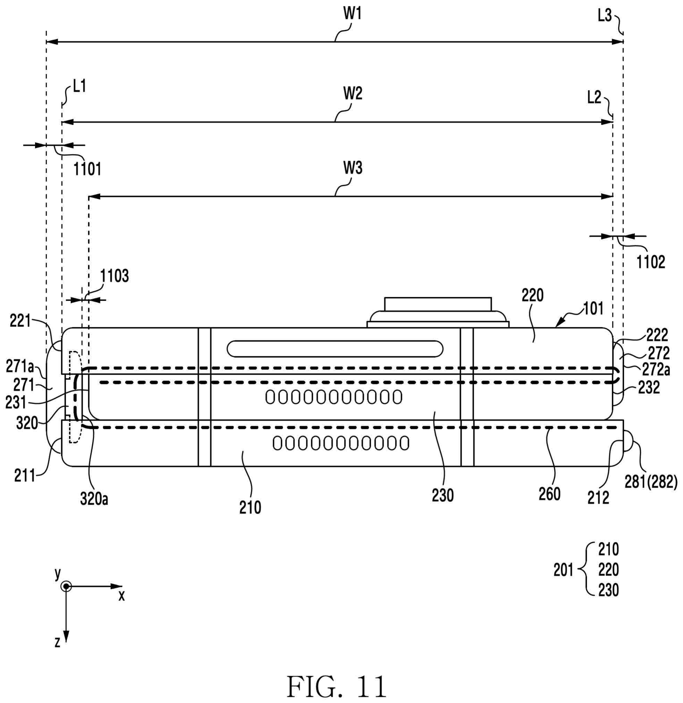

According to an embodiment, the electronic device 101 may include a key button 281 and/or a fingerprint recognition part 282. For example, the key button 281 and/or the fingerprint recognition part 282 may be disposed on a lateral side (e.g., a second lateral side 212 of FIG. 11) of the first housing 210 opposite to the first hinge assembly 240. For example, a portion of the key button 281 is exposed to the lateral side 212 of the first housing 210, so that a user may push the key button 281. The key button 281 and the fingerprint recognition part 282 may be formed in a single physical structure.

Referring to FIG. 2B, in the folded state of the electronic device 101, the first housing 210, the second housing 220, and the third housing 230 may overlap. For example, in the folded state, the third housing 230 may be located between the first housing 210 and the second housing 220. In the folded state, a front surface of the first housing 210 may face a rear surface of the third housing 230, and a front surface of the second housing 220 may face a front surface of the third housing 230.

According to an embodiment, a thickness of the first housing 210, a thickness of the second housing 220, and a thickness of the third housing 230 may be different from each other. For example, in the folded state, the thickness of the third housing 230 located between the first housing 210 and the second housing 220 may be thinner than the thickness of the first housing 210 and the thickness of the second housing 220. However, it is not limited thereto. For example, the thickness of the second housing 220 may be thinner than the thickness of the first housing 210 and the thickness of the third housing 230. In the folded state of the electronic device 101, the first hinge cover 271 and the second hinge cover 272 may be exposed to the outside.

According to an embodiment, the electronic device 101 may include a cover display 284. The cover display 284 may be referred to as a sub-display. For example, the cover display 284 may be disposed on the first housing 210. For example, the cover display 284 may be opposite to the first display area 261 of the flexible display 260. In the folded state of electronic device 101, the flexible display 260 may not be visible from the outside by being covered by foldable housing 201. The cover display 284 may be configured to display visual information, in the folded state of electronic device 101. The cover display 284 may be configured to provide text, image and/or video, in the folded state of the electronic device 101. As illustrated in FIG. 2B, since the second housing 220 is located on the outside in the folded state of the electronic device 101, one or more cameras 283 disposed in the second housing 220 may be available to photograph a subject.

Referring to FIG. 2C, the protection frames 310 may protect the flexible display 260 by at least partially covering an edge of the flexible display 260. For example, the protection frames 310 may be disposed on the flexible display 260.

According to an embodiment, the protection frames 310 may include a first frame 311, a second frame 312, and a third frame 313. As described above, when the foldable housing 201 is deformed, the second frame 312 located between the first frame 311 and the third frame 313 may be spaced apart from the first frame 311 and the third frame 313 so as not to be interfered by the protection frames 310.

According to an embodiment, the electronic device 101 may include the cap 320 for reducing the inflow of foreign substances (e.g., dust) between the first frame 311 and the second frame 312 and/or between the second frame 312 and the third frame 313. The cap 320 may include a first cap 321 and a second cap 322 disposed between the first frame 311 and the second frame 312, and a third cap 323 and a fourth cap 324 disposed between the second frame 312 and the third frame 313.

The cap 320 may support a cover for filling a gap formed between the protection frames 310. The cap 320 may protrude toward the flexible display 260, in order to support the cover. For example, the cap 320 may include a protrusion 320a protruding toward the flexible display 260. When the protrusion 320a is in contact with the flexible display 260, damage to the flexible display 260 may occur, so the protrusion 320a may be spaced apart from the flexible display 260. A gap may be formed between the protrusion 320a and the flexible display 260. For example, the gap may be about 0.30 mm to about 0.50 mm, but is not limited thereto.

Hereinafter, according to an embodiment, an operation in which the foldable housing 201 of the electronic device 101 is folded or unfolded will be described.

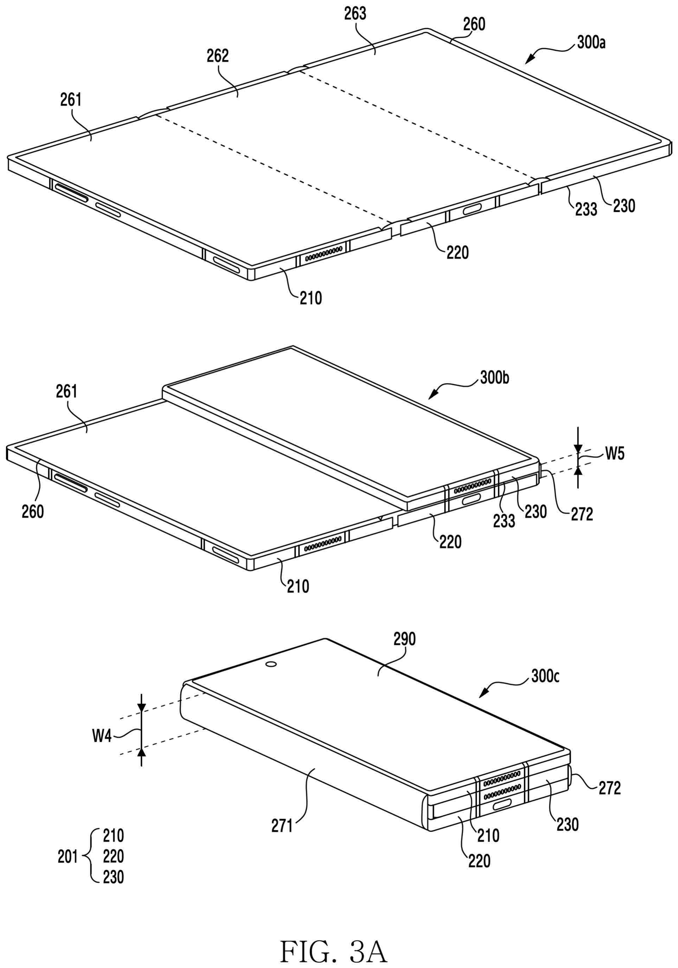

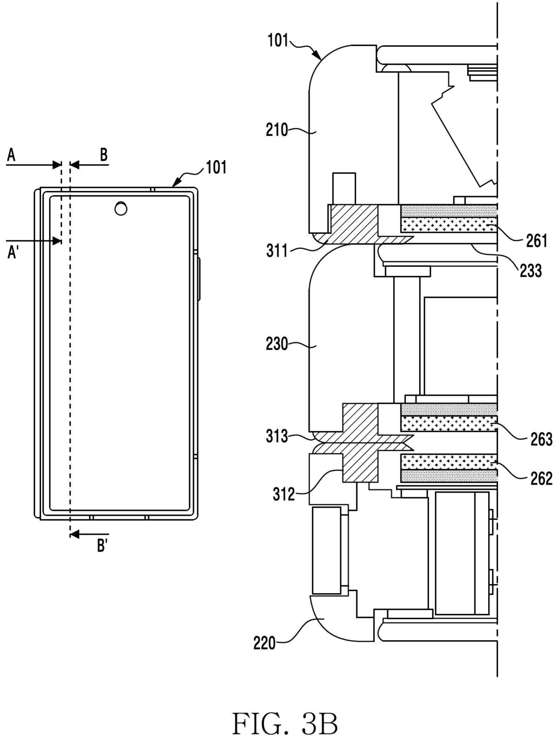

FIG. 3A illustrates a process in which an electronic device is transformed from an unfolded state to a folded state, according to an embodiment. FIG. 3B is a cross-sectional view of an electronic device cut along line A-A' of FIG. 3B, according to an embodiment.

Referring to FIG. 3A, a foldable housing 201 may be configured to provide a first state, a second state, and a third state. The first state may be referred to as an unfolded state of an electronic device 101. The third state may be referred to as a folded state of the electronic device 101. The second state may be referred to as an intermediate state between the first state and the second state.

A state 300a of FIG. 3A represents the first state. In the first state, a first housing 210, a second housing 220, and a third housing 230 may be disposed on substantially the same plane. For example, in the first state, a first angle between a first display area 261 and a second display area 262 and a second angle between the second display area 262 and a third display area 263 may be substantially a straight angle (e.g., about 180 degrees). The first state may be referred to as an opened state, a flat state, and/or an outspread state, in terms of the first housing 210, the second housing 220, and the third housing 230 being fully unfolded. In the first state, the flexible display 260 may be substantially flat.

A state 300b of FIG. 3A represents the second state. In the second state, the first angle may maintain substantially a straight angle, and the second angle may be substantially 0 degree. For example, in the first state, as the third housing 230 rotates relative to the second housing 220, the electronic device 101 may be changed from the first state to the second state. When a user applies an external force to the third housing 230 in the first state in order to fold the third housing 230, the third housing 230 may rotate counterclockwise with respect to the first housing 210 through a second hinge assembly (e.g., the second hinge assembly 250 of FIG. 2A). The second hinge assembly 250 may rotatably connect the second housing 220 and the third housing 230 so that the third housing 230 is folded inward with respect to the second housing 220. The second state may be referred to as a semi-folded state (or semi-unfolded state), a sub-unfolded state (or sub-fold state), a first folded state, an intermediate state, and/or a concave state, in terms of a portion of the foldable housing 201 being folded.

A state 300c of FIG. 3A represents the third state. In the third state, the first angle and the second angle may be substantially 0 degree. For example, in the second state, as the first housing 210 rotates with respect to the second housing 220, the electronic device 101 may be changed from the second state to the third state. For example, when the user applies an external force to the first housing 210 in the second state to fold the first housing 210, the first housing 210 may rotate clockwise with respect to the second housing 220 through a first hinge assembly (e.g., the first hinge assembly 240 of FIG. 2A). The first hinge assembly 240 may rotatably connect the first housing 210 and the second housing 220 so that the first housing 210 is folded inward with respect to the second housing 220. The third state may be referred to as a second folded state, a folded state, and/or a closed state, in terms of the foldable housing 201 being fully folded. For example, the second folded state may be formed as the first housing 210 in the first folded state is folded.

According to an embodiment, the foldable housing 201 may be referred to as an in-fold structure in terms of the first housing 210 and the third housing 230 being folded inward. For example, the first folded state and the second folded state may be a state in which the foldable housing 201 is folded inward with respect to the flexible display 260. In a third folded state of the foldable housing 201, the third housing 230 may be located between the first housing 210 and the second housing 220. For example, referring to the state 300c of FIG. 3A, the first housing 210, the third housing 230, and the second housing 220 may be sequentially located in a direction from top to bottom (e.g., a direction in which the sub-display 284 is viewed from above).

The electronic device 101 may be used in the first state, in order to use the flexible display 260 of a large screen. The electronic device 101 may be switched from the first state to the third state, in order to be easily carried by the user. For example, the foldable housing 201 may be switched from the first state to the third state through the second state. For example, in the first state, the third housing 230 may first be folded inward with respect to the second housing 220 (the second state), and then the first housing 210 may be folded inward with respect to the second housing 220 (the third state).

According to an embodiment, a structure of the first hinge assembly 240 and a structure of the second hinge assembly 250 may be different from each other, in order to provide the third state. In case that a width of the first hinge assembly 240 is substantially the same as or similar to a size of the second hinge assembly 250, when the first housing 210 and the second housing 220 are folded, a space in which the third housing 230 may be located may not be formed. In the third state, the width of the first hinge assembly 240 may be greater than the width of the second hinge assembly 250, in order to provide a space in which the third housing 230 may be located between the first housing 210 and the second housing 220. The width of the first hinge cover 271 may be different from the width of the second hinge cover 272, due to the difference in the width. For example, a width (e.g., a fourth width W4 of FIG. 3A) of the first hinge cover 271 may be wider than a width (e.g., a fifth width W5 of FIG. 3A) of the second hinge cover 272. In terms of having different widths, the first hinge assembly 240 may be referred to as a wide hinge, and the second hinge assembly 250 may be referred to as a narrow hinge.

Referring to FIG. 3B, when the electronic device 101 in the third state is viewed from above, the first housing 210, the second housing 220, and the third housing 230 may overlap each other. In the third state in which the foldable housing 201 is folded, the third housing 230 may be located between the first housing 210 and the second housing 220. For example, in the third state, the second frame 312 and the third frame 313 may be in contact with each other. For example, in the third state, a portion of the second display area 262 disposed on the second housing 220 may face a portion of the third display area 263 disposed on the third housing 230. In the third state, a portion of the first display area 261 disposed on the first housing 210 may face a rear surface 233 of the third housing 230 opposite to the third display area 263.

As described above, the electronic device 101 according to an embodiment may include the foldable housing 201 that is folded inward. The foldable housing 201 in the unfolded state may be folded in order that the third housing 230 is folded inward with respect to the second housing 220 and then the first housing 210 is folded inward with respect to the second housing 220. In the third state, in order for the third housing 230 to be located between the first housing 210 and the second housing 220, a space in which the third housing 230 may be located between the first housing 210 and the second housing 220 may be required. Hereinafter, a structure of the electronic device 101 for providing the above-described folded method will be described.

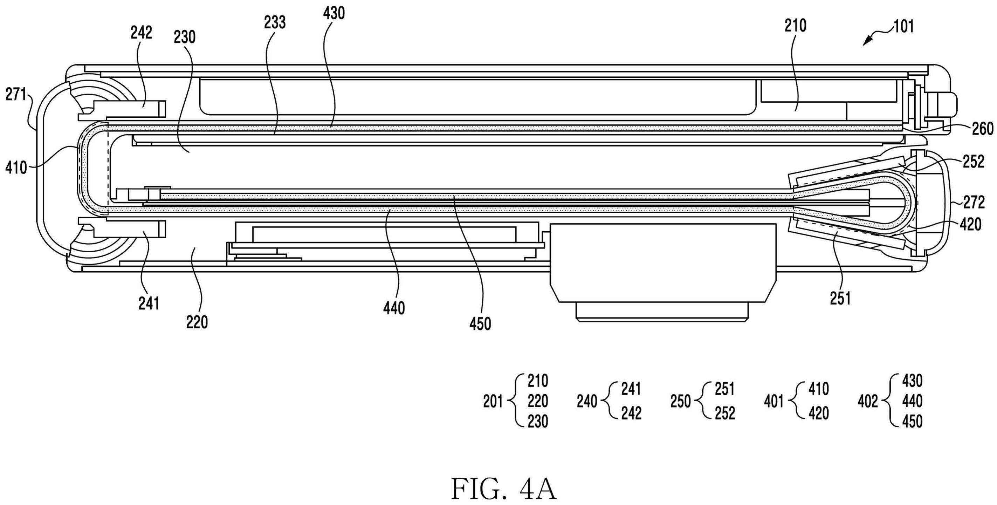

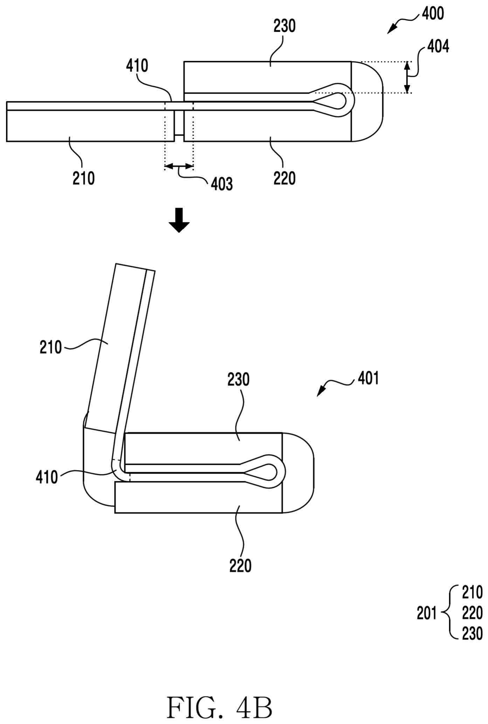

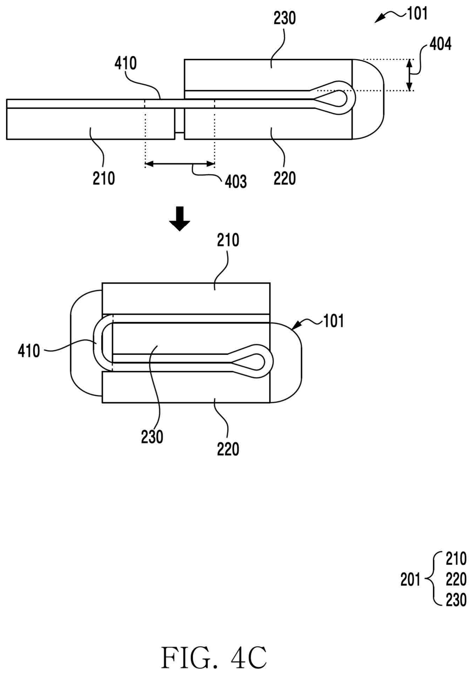

FIG. 4A is a cross-sectional view of an electronic device cut along line B-B' of FIG. 3B, according to an embodiment. FIG. 4B schematically illustrates an operation of an electronic device according to a comparative example. FIG. 4C schematically illustrates an operation of an electronic device according to an embodiment.

Referring to FIG. 4A, a flexible display 260 may include portions, which are curved in a folded state of the electronic device 101. The flexible display 260 being curved may be referred to as a portion of the flexible display 260 being deformed and a remaining portion of the flexible display 260 not being deformed.

According to an embodiment, as the electronic device 101 is changed from an unfolded state to a folded state, the flexible display 260 may be classified into a deformable area (or deformed area) 401 capable of being deformed and an undeformed area 402 capable of being not deformed. The deformable area 401 and the undeformed area 402 may be classified by whether a shape of the flexible display 260 is deformed according to a state of the foldable housing 201.

The deformable area 401 may be referred to as an area of the flexible display 260 that is deformable as the foldable housing 201 is folded or unfolded. For example, the flexible display 260 may include a structure (e.g., a lattice structure) capable of being deformed by folding or unfolding the deformable area 401. The deformable area 401 may be at least partially curved by the foldable housing 201 and/or a hinge assembly (e.g., a first hinge assembly 240 and a second hinge assembly 250).

The deformable area 401 being at least partially curved may be referred that a portion of the deformable area 401 may form a curved surface with a curvature and another portion of the deformable area 401 may form a planar surface. For example, in the folded state of the electronic device 101, a portion of the deformable area 401 may form a curved surface with a curvature, and another portion of the deformable area 401 may form a planar surface. The deformable area 401 may be a portion of the flexible display 260 that is deformed by a folding operation of the foldable housing 201 by including a boundary between a first display area (e.g., the first display area 261 of FIG. 2A) and a second display area (e.g., the second display area 262 of FIG. 2A), or a boundary between the second display area 262 and a third display area (e.g., the third display area 263 of FIG. 2A).

The undeformed area 402 may be referred to as a remaining area of the flexible display 260 different from the deformable area 401. The undeformed area 402 may be attached to the foldable housing 201 to maintain a fixed shape. The undeformed area 402 may be substantially flat, independent of a state of the electronic device 101. For example, in all of the unfolded state, folded state, and/or intermediate state of the electronic device 101, the undeformed area 402 may be substantially flat without being curved.

According to an embodiment, the deformable area 401 may include a first deformable area 410 and a second deformable area 420. In the folded state of the electronic device 101, as a portion of the flexible display 260 is folded, the first deformable area 410 and the second deformable area 420 may be formed. For example, the first deformable area 410 may include the boundary between the first display area 261 and the second display area 262. A portion of the first deformable area 410 may be formed as the first display area 261 is partially deformed, and a remaining portion of the first deformable area 410 may be formed as the second display area 262 is partially deformed. For example, the second deformable area 420 may include the boundary between the second display area 262 and the third display area 263. A portion of the second deformable area 420 may be formed as the second display area 262 is partially deformed, and a remaining portion of the second deformable area 420 may be formed as the third display area 263 is partially deformed.

For example, the undeformed area 402, which is different from the first deformable area 410 and the second deformable area 420, may be classified into a first area 430, a second area 440, and a third area 450. For example, the first area 430 is an area not deformed in the first display area 261, and may be in contact with the first deformable area 410. For example, the second area 440 is an area not deformed in the second display area 262, and may be located between the first deformable area 410 and the second deformable area 420. For example, the third area 450 is an area not deformed in the third display area 263, and may be in contact with the second deformable area 420. For example, in the folded state of the electronic device 101, the first deformable area 410 may be located between the first area 430 and the second area 440, and the second deformable area 420 may be located between the second area 440 and the third area 450.

As described above, the first housing 210 and the third housing 230 may be folded inward with respect to the second housing 220, and the third housing 230 may be located between the first housing 210 and the second housing 220 in the folded state of the electronic device 101. Since the third housing 230 is first folded inward when the electronic device 101 is changed from the unfolded state to the folded state, the first area 430 may face a rear surface 233 of the third housing 230 in the folded state of the electronic device 101. Since the third housing 230 is folded and then the third housing 230 is folded inward, the rear surface 233 of the third housing 230 may be referred to as a surface of the third housing 230 opposite to a front surface in which the third display area 263 is disposed. According to an embodiment, in the folded state of the electronic device 101, the second area 440 may face the third area 450.

Since the first area 430 faces the rear surface 233 of the third housing 230 and the second area 440 faces the third area 450, gaps between the areas 430, 440, and 450 may be different in the folded state of the electronic device 101. According to an embodiment, in the folded state, a gap between the first area 430 and the third area 450 may be greater than a gap between the second area 440 and the third area 450.

Since the third housing 230 is located between the first area 430 and the third area 450, the gap between the first area 430 and the third area 450 may be designed to be greater than a certain gap so that the third housing 230 may be located between the first housing 210 and the second housing 220. According to an embodiment, the gap between the first area 430 and the second area 440 may be greater than a thickness of the third housing 230.

For example, in case that the gap between the first area 430 and the second area 440 is smaller than or equal to the thickness of the third housing 230, the first housing 210 may not be fully folded or the flexible display 260 may be damaged, when the first housing 210 is folded inward in a state in which the third housing 230 is folded first (e.g., the state 300b of FIG. 3A). As the gap is formed to be greater than the thickness of the third housing 230, the first housing 210 may be fully folded, and the third housing 230 may be located between the first housing 210 and the second housing 220 in the folded state of the electronic device 101. For example, when the electronic device 101 includes protection frames (e.g., protection frames 310 of FIG. 2C), a distance between the first area 430 and the second area 440 may be greater than the sum of the thickness of the third housing 230 and a thickness of the protection frame.

In the folded state of the electronic device 101, in order for the third housing 230 to be located between the first housing 210 and the second housing 220, a width of the first deformable area 410 may be greater than the thickness of the third housing 230. For example, when the width of the first deformable area 410 is smaller than the thickness of the third housing 230, the foldable housing 201 may not be fully folded.

FIGS. 4B and 4C are diagrams for comparing a folding operation of the foldable housing 201 according to a width 403 of the first deformable area 410 and a thickness 404 of the third housing 230. An electronic device 400 according to a comparative example illustrated in FIG. 4B schematically represents an electronic device in which the width 403 of the first deformable area 410 is smaller than or equal to the thickness 404 of the third housing 230.

When the electronic device 400 according to the comparative example is changed from an intermediate state to the folded state, the first housing 210 may be folded in an inward folding direction (e.g., clockwise) with respect to the second housing 220. When the first housing 210 is folded, since the width 403 of the first deformable area 410 is smaller than or equal to the thickness 404 of the third housing 230, the first housing 210 may not be fully folded. Since the first deformable area 410 may not accommodate the thickness 404 of the third housing 230 even when being partially curved, rotation of the first housing 210 in the direction may be limited.

The electronic device 101 of FIG. 4C schematically represents an electronic device 101 according to an embodiment in which the width 403 of the first deformable area 410 is greater than the thickness 404 of the third housing 230. When the electronic device 101 according to an embodiment is changed from an intermediate state to the folded state, the first housing 210 may be folded an inward folding direction (e.g., clockwise) with respect to the second housing 220. When the first housing 210 is folded, since the width 403 of the first deformable area 410 is greater than the thickness 404 of the third housing 230, the first housing 210 may be disposed on the third housing 230 while the first deformable area 410 is at least partially curved. Since the width 403 of the first deformable area 410 is greater than the thickness 404 of the third housing 230, the width 403 of the first deformable area 410 may be sufficient to accommodate the thickness 404 of the third housing 230. In a state in which the foldable housing 201 is folded, a gap between the first area 430 and the third area 450 may be greater than the thickness of the third housing 230, due to the first deformable area 410 having the width 403 greater than the thickness 404 of the third housing 230.

Hereinafter, a detailed structure of the flexible display 260 in the folded state of the electronic device 101 will be described.

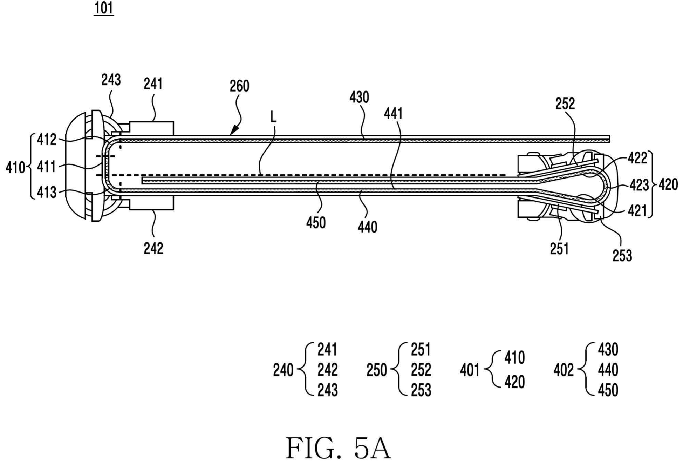

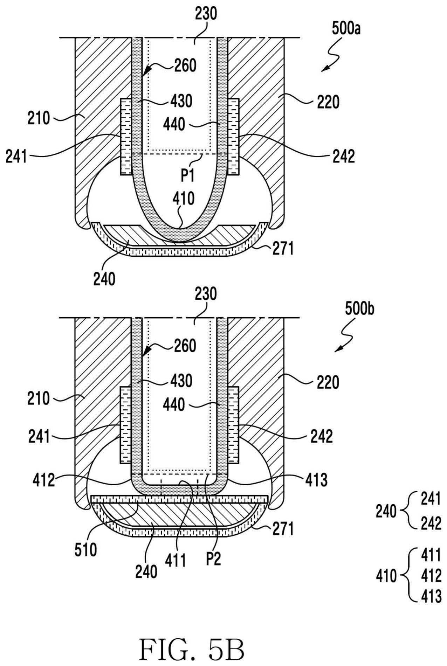

FIG. 5A illustrates a flexible display, a first hinge structure, and a second hinge structure in a folded state. FIG. 5B schematically illustrates examples of a first deformable area in a folded state.

Referring to FIG. 5A, in a folded state of a foldable housing (e.g., the foldable housing 201 of FIG. 2A), a flexible display 260 may be classified into a deformable area 401 and an undeformed area 402. As described above, the classification of the deformable area 401 and the undeformed area 402 may be classified according to whether a shape is deformed. For example, the deformable area 401 may be an area of the flexible display 260, which is at least partially curved as the electronic device 101 is changed from an unfolded state to a folded state. For example, the undeformed area 402 may be an area of the flexible display 260, which is substantially flat independent of the state of the foldable housing 201. For example, the deformable area 401 may include a first deformable area 410 and a second deformable area 420. For example, the undeformed area 402 may include a first area 430, a second area 440, and a third area 450.

For example, the first deformable area 410 may be formed by a first hinge assembly 240. According to an embodiment, the first hinge assembly 240 may include first hinge plates (e.g., a first plate 241 and a second plate 242) and a first hinge bracket 243. Each of the first plate 241 and the second plate 242 may be rotatably connected to the first hinge bracket 243. The first plate 241 may be coupled to the first housing 210. The second plate 242 may be coupled to the second housing 220. For example, when an external force causing rotation of the first housing 210 is applied, the first plate 241 and the second plate 242 may be rotated by the external force. Although not illustrated, the first hinge assembly 240 may include a connecting gear linking rotation operations of the first plate 241 and the second plate 242. For example, as the first plate 241 is rotated, a portion of a first display area (e.g., the first display area 261 of FIG. 2A) may be curved, and as the second plate 242 is rotated, a portion of a second display area (e.g., the second display area 262 of FIG. 2A) may be curved. The first deformable area 410 may be formed by the portion of the first display area 261 and the portion of the second display area 262. The first deformable area 410 may be curved by the first hinge plates (e.g., the first plate 241 and the second plate 242). The first deformable area 410 may include a boundary between the first display area 261 and the second display area 262.

For example, the second deformable area 420 may be formed by a second hinge assembly 250. According to an embodiment, the second hinge assembly 250 may include second hinge plates (e.g., a third plate 251 and a fourth plate 252) and a second hinge bracket 253. Each of the third plate 251 and the fourth plate 252 may be rotatably connected to the second hinge bracket 253. The third plate 251 may be coupled to the second housing 220. The fourth plate 252 may be coupled to the third housing 230. For example, when an external force causing rotation of the third housing 230 is applied, the third plate 251 and the fourth plate 252 may be rotated by the external force. For example, as the third plate 251 is rotated, another portion of the second display area 262 may be curved, and as the fourth plate 252 is rotated, a portion of the third display area 263 may be curved. The second deformable area 420 may be formed by the other portion of the second display area 262 and the portion of the third display area 263. The second deformable area 420 may be curved by second plates (e.g., the third plate 251 and the fourth plate 252). The second deformable area 420 may include a boundary between the second display area 262 and the third display area 263.

Since the first deformable area 410 is deformed (e.g., curved) by the first hinge assembly 240, a shape of the first deformable area 410 may be determined based on an arrangement structure of the first hinge assembly 240 in the folded state. According to an embodiment, the first deformable area 410 may include a first curved portion 412, a second curved portion 413, and a first flat portion 411.

For example, as the first display area 261 is partially curved, the first curved portion 412 may be formed. For example, the first curved portion 412 may be a portion that is curved to have a curvature (e.g., a first maximum curvature) in a portion of the first display area 261 curved by the first plate 241.

For example, as the second display area 262 is partially curved, the second curved portion 413 may be formed. For example, the second curved portion 413 may be a portion that is curved to have a curvature (e.g., a second maximum curvature) in a portion of the second display area 262 curved by the second plate 242. According to an embodiment, the first maximum curvature of the first curved portion 412 may correspond to the second maximum curvature of the second curved portion 413. In the present disclosure, "maximum curvature" may be referred to as a curvature of a point having the greatest curvature, among curvatures in the curved portion (e.g., the first curved portion 412, the second curved portion 413, and/or the third curved portion 423). For example, when the curved portion is curved to have a constant curvature, a curvature in the curved portion may be substantially the same as the maximum curvature. For example, when the curved portion is curved to have a non-constant curvature, a point with a maximum curvature may be formed within the curved portion.

For example, the first curved portion 412 and the second curved portion 413 may be formed by a rotation operation of the first plate 241 and the second plate 242. Since a rotation operation of the first plate 241 and a rotation operation of the second plate 242 are linked by the connecting gear, the first curved portion 412 and the second curved portion 413 may be formed in substantially the same shape.

According to an embodiment, the first maximum curvature of the first curved portion 412 and the second maximum curvature of the second curved portion 413 in which the flexible display 260 is deformed may be set in consideration of the marketability of the flexible display 260. For example, when the first maximum curvature and the second maximum curvature are increased, the overall width of the flexible display 260 may be reduced. When the overall width of the flexible display 260 is reduced, a size of a display area for providing visual information may be reduced. In order to provide a large screen by using the compact foldable housing 201, the first curved portion 412 and the second curved portion 413 may have a maximum curvature less than or equal to about 1.5R. For example, the first maximum curvature and/or the second maximum curvature may be less than or equal to about 1.5R. For example, the first maximum curvature and the second maximum curvature may be the same as or similar to a limit curvature of the flexible display 260.

For example, the first flat portion 411 may be located between the first curved portion 412 and the second curved portion 413. According to an embodiment, the first flat portion 411 may be substantially flat. For example, the first hinge assembly 240 may include a support plate 510 (e.g., the support plate 510 of FIG. 5B) to support the first flat portion 411. The support plate 510, which is a flat plate, may support the first flat portion 411 formed in a folded state. The first flat portion 411 may be supported by the support plate 510, to have a flat shape and be protected from the external force.

According to an embodiment, the first flat portion 411 may be spaced apart from the first area 430 and the second area 440 by an inner diameter or more corresponding to the first maximum curvature and the second maximum curvature, for a maximum curvature in which the first maximum curvature and the second maximum curvature are less than or equal to about 1.5R. For example, a virtual line L extending in a direction perpendicular to the first flat portion 411 may be located above a surface 441 (e.g., the front surface) of the second area 440, on a boundary between the first flat portion 411 and the second curved portion 413. As described above, a distance between the virtual line L and the surface 441 of the second area 440 may be greater than or equal to about 1.5 mm, which is an inner diameter corresponding to the first maximum curvature and/or the second maximum curvature, in order for the first maximum curvature and/or the second maximum curvature to be less than or equal to about 1.5R. When the distance is less than about 1.5 mm, since the first maximum curvature and/or the second maximum curvature becomes greater than about 1.5R, a size of the display area of the flexible display 260 may be reduced. According to an embodiment, as the virtual line L is located above the surface 441 of the second area 440 and the distance is formed to be greater than or equal to about 1.5 mm, the first maximum curvature and/or the second maximum curvature may be less than or equal to about 1.5R.

According to an embodiment, the first flat portion 411 may be formed between the first curved portion 412 and the second curved portion 413, and a length of the first flat portion 411 may be less than or equal to a thickness of the third housing 230 located between the first area 430 and the third area 450. When the length of the first flat portion 411 is greater than a thickness (e.g., the thickness 404 of FIG. 4C) of the third housing 230, since a space for the third housing 230 is too large, the overall thickness of the electronic device 101 in the folded state may be too thick. Since a portion of the space for the third housing 230 may be secured by the first curved portion 412, the length of the first flat portion 411 may be less than or equal to the thickness of the third housing 230, in order to reduce the overall thickness of the electronic device 101 in the folded state.

Referring to FIG. 5B, as the first flat portion 411 is formed between the first curved portion 412 and the second curved portion 413, a size of the space for the third housing 230 may increase between the first housing 210 and the second housing 220 in the folded state. 500a of FIG. 5B schematically illustrates a shape of the flexible display 260 in the folded state of the electronic device 101 when the first flat portion 411 is not formed. 500B of FIG. 5B schematically illustrates a shape of the flexible display 260 in the folded state of the electronic device 101 when the first flat portion 411 is formed.

Referring to 500a of FIG. 5B, when the first flat portion 411 is not formed and the first deformable area 410 is curved as a whole, since the first deformable area 410 protrudes toward the first hinge assembly 240, it may have a relatively gradual curvature. Since the curvature of the first deformable area 410 is formed relatively gradually, a location P1 where a space between the first area 430 and the second area 440 beings to narrow may be relatively far away from the first hinge cover 271. In the folded state, the third housing 230 located between the first housing 210 and the second housing 220 may be spaced apart from the location P1 so as not to interfere with the flexible display 260. As the location P1 moves away from the first hinge cover 271, a size of the third housing 230 may decrease. For example, since the first deformable area 410 protrudes toward the first hinge assembly 240, a space for accommodating the first deformable area 410 protruding may be required. For example, an accommodation groove may be required in a portion of the first hinge assembly 240, in order to accommodate the first deformable area 410 protruding toward the first hinge assembly 240.

Referring to 500b of FIG. 5B, when the first flat portion 411 is disposed, the first deformable area 410 may have a relatively sharp curvature in the first curved portion 412 and the second curved portion 413. Since the curvature is formed relatively sharply in the first curved portion 412 and the second curved portion 413, a location P2 where a space between the first area 430 and the second area 440 begins to narrow may become relatively close to the first hinge cover 271. In the folded state, the third housing 230 located between the first housing 210 and the second housing 220 may be spaced apart from the location P2 so as not to interfere with the flexible display 260, as the location P2 become close to the first hinge cover 271, the size of the third housing 230 may increase.

According to an embodiment, since the first flat portion 411 is formed by the support plate 510 so that the first deformable area 410 may be supported without protruding toward the first hinge assembly 240, the first hinge assembly 240 may have a simple structure.

Referring back to FIG. 5A, since the second deformable area 420 is deformed by the second hinge assembly 250, a shape of the second deformable area 420 may be determined based on a structure of the second hinge assembly 250, in the folded state. According to an embodiment, the second deformable area 420 may include a second flat portion 421, a third flat portion 422, and a third curved portion 423.

For example, the second flat portion 421 may be inclined with respect to the undeformed area 402. For example, the second flat portion 421 may be inclined at a first angle with respect to the second area 440 within the second display area 262. For example, the third flat portion 422 may be inclined at a second angle with respect to the third area 450 within the third display area 263. According to an embodiment, the first angle may correspond to the second angle. For example, the second flat portion 421 may be supported by the third plate 251, and the third flat portion 422 may be supported by the fourth plate 252. In the folded state, the second plate 242 and the third plate 251 are not parallel to each other and are configured to be inclined with respect to each other, so that the second flat portion 421 may be inclined with respect to the second area 440, and the third flat portion 422 may be inclined with respect to the third area 450. The second flat portion 421 may be formed by a rotation operation of the third plate 251, and the third flat portion 422 may be formed by a rotation operation of the fourth plate 252. Since the rotation operation of the third plate 251 and the rotation operation of the fourth plate 252 are linked by the connecting gear, a first slope and a second slope may be substantially the same.

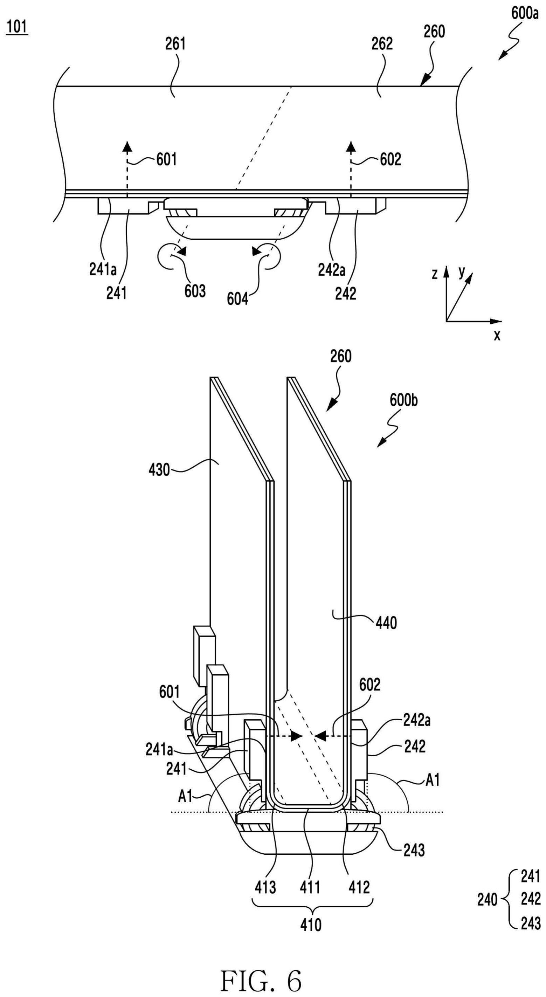

Hereinafter, a detailed structure of the first deformable area 410 will be described with reference to FIG. 6.

FIG. 6 illustrates a flexible display and a first hinge structure of an electronic device according to an embodiment.

Referring to FIG. 6, a first hinge assembly 240 may include first hinge plates (e.g., a first plate 241 and a second plate 242) rotatably coupled to a first hinge bracket 243. In an unfolded state 600a of the electronic device 101, the first plate 241 and the second plate 242 may support a portion of a first display area (e.g., the first display area 261 of FIG. 2A) and a portion of a second display area (e.g., the second display area 262 of FIG. 2A). In the unfolded state 600a, a first direction 601 toward which a surface 241a of the first plate 241 supporting a portion of the first display area 261 faces may correspond to a second direction 602 toward which a surface 242a of the second plate 242 supporting a portion of the second display area 262 faces. For example, the first direction 601 and the second direction 602 may face +z direction.

When the electronic device 101 is changed from the unfolded state 600a to a folded state 600b, the first plate 241 may be rotated with respect to a first rotation axis 603, and the second plate 242 may be rotated with respect to a second rotation axis 604. For example, the first rotation axis 603 and the second rotation axis 604 may be parallel to y-axis. For example, the first rotation axis 603 and the second rotation axis 604 may be spaced apart from each other with respect to the x-axis direction. Since the first plate 241 and the second plate 242 rotate in conjunction with each other, a rotation angle of the first plate 241 may be substantially the same as a rotation angle of the second plate 242. As the first plate 241 and the second plate 242 are rotated by about 90 degrees in the folded state 600b of the electronic device 101, the first direction 601 may be opposite to the second direction 602. According to an embodiment, in the folded state 600b, the first plate 241 and the second plate 242 may be substantially parallel to each other.

For example, a portion of the first display area 261 supported by the first plate 241 in the unfolded state 600a may be at least partially curved based on a rotation of the first plate 241 with respect to the first rotation axis 603. As the first plate 241 is rotated by about 90 degrees, the first area 430 attached to the first housing 210 may be rotated by about 90 degrees. For example, a portion of the second display area 262 supported by the second plate 242 in the unfolded state 600a may be at least partially curved based on a rotation of the second plate 242 with respect to the second rotation axis 604. As the second plate 242 is rotated by about 90 degrees, the second area 440 attached to the second housing 220 may be rotated by about 90 degrees. The first area 430 and the second area 440 may be substantially parallel to each other within the folded state 600b.

According to an embodiment, when the electronic device 101 is changed from the unfolded state 600a to the folded state 600b, or from the folded state 600b to the unfolded state 600a, a first angular range A1 in which the first hinge plates (e.g., the first plate 241 and the second plate 242) rotate with respect to the first hinge bracket 243 may be about 180 degrees. The first angular range A1 may be referred to as the sum of the rotation angle of the first plate 241 and the rotation angle of the second plate 242.

When the electronic device 101 is changed from the folded state 600b to the unfolded state 600a, the first deformable area 410 between the first area 430 and the second area 440 may be partially curved. For example, since the first area 430 and the second area 440 are parallel, the first deformable area 410 may be partially curved between the first area 430 and the second area 440. Since a first flat portion 411 in the first deformable area 410 maintains a substantially flat shape by being supported by a support plate (e.g., the support plate 510 of FIG. 5B), it may be an area that is included in the first deformable area 410 but is not substantially deformed. In the folded state 600b, the first flat portion 411 may be perpendicular to the first area 430 and the second area 440 by maintaining a substantially flat shape.

A first curved portion 412 between the first area 430 and the first flat portion 411, which are perpendicular to each other, may be curved at a first maximum curvature from the first area 430 to the first flat portion 411.

A second curved portion 413 between the second area 440 and the first flat portion 411, which are perpendicular to each other, may be curved to have a second maximum curvature from the second area 440 to the first flat portion 411. The first maximum curvature and the second maximum curvature may be the same as or similar to a limit curvature of the flexible display 260.

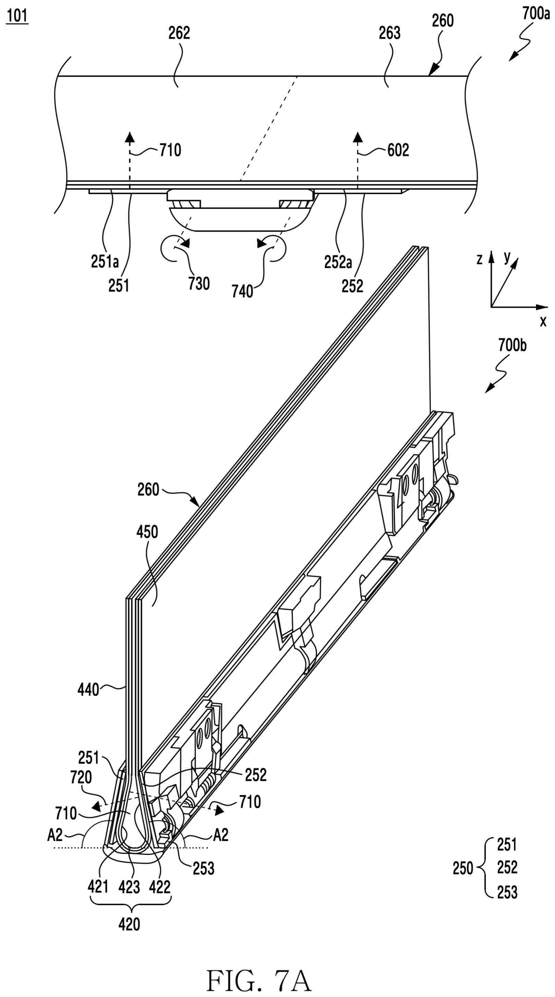

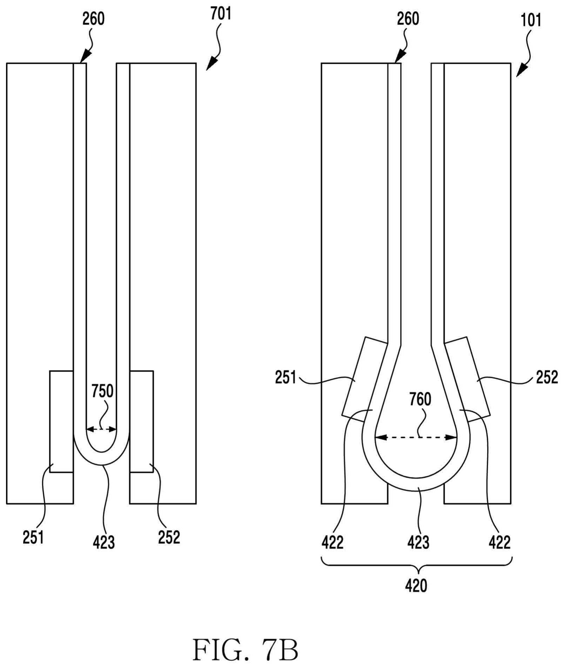

Hereinafter, a detailed structure of the second deformable area 420 will be described with reference to FIGS. 7A and 7B.

FIG. 7A illustrates a flexible display and a second hinge structure of an electronic device according to an embodiment. FIG. 7B is a diagram for comparing a folded structure of a second area.

Referring to FIG. 7A, a second hinge assembly 250 may include second hinge plates (e.g., a third plate 251 and a fourth plate 252) rotatably coupled to a second hinge bracket 253. In an unfolded state 700a of the electronic device 101, the third plate 251 and the fourth plate 252 may support another portion of a second display area 262 and a portion of a third display area 263. In the unfolded state 700a, a third direction 710 toward which a surface 251a of the third plate 251 supporting another portion of the second display area 262 faces may correspond to a fourth direction 720 toward which a surface 252a of the fourth plate 252 supporting a portion of the third display area 263 faces. For example, the third direction 710 and the fourth direction 720 may face +z direction.

When the electronic device 101 is changed from the unfolded state 700a to a folded state 700b, the third plate 251 may be rotated with respect to a third rotation axis 730, and the fourth plate 252 may be rotated with respect to a fourth rotation axis 740. For example, the third rotation axis 730 and the fourth rotation axis 740 may be parallel to the y-axis. For example, the third rotation axis 730 and the second rotation axis 604 may be spaced apart from each other in the x-axis direction. Since the third plate 251 and the fourth plate 252 rotate in conjunction with each other, a rotation angle of the third plate 251 may be substantially the same as a rotation angle of the fourth plate 252.

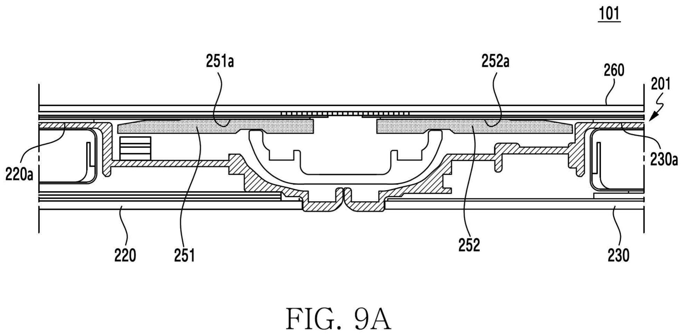

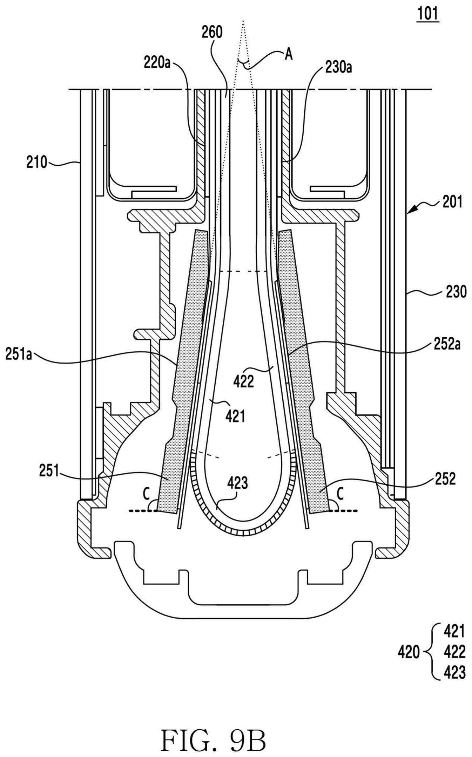

According to an embodiment, in the folded state 700b of the electronic device 101, the third plate 251 and the fourth plate 252 may be disposed to be inclined with respect to each other. For example, in the folded state 700b, the third direction 710 may be inclined with respect to the fourth direction 720. For example, when the electronic device 101 is changed from the unfolded state 700a to the folded state 700b, a rotation angle of a second housing (e.g., the second housing 220 of FIG. 2A) and a rotation angle of a third housing (e.g., the third housing 230 of FIG. 2A) may be different from the rotation angle of the third plate 251 and the rotation angle of the fourth plate 252. For example, the rotation angle of the second housing 220 and the rotation angle of the third housing 230 may be about 90 degrees, and the rotation angle of the third plate 251 and the rotation angle of the fourth plate 252 may be greater than 90 degrees. Due to a difference in the rotation angle, the second deformable area 420 may be curved in a water droplet shape (or a dumbbell shape) in the folded state 700b. A structure causing the shape of the second display area 262 will be described later through FIGS. 9A and 9B.

For example, another portion of the second display area 262 supported by the third plate 251 in the unfolded state 700a may be inclined with respect to the second area 440, based on rotation of the third plate 251 with respect to the third rotation axis 730. As the third plate 251 rotates at an angle greater than about 90 degrees, a second flat portion 421 inclined with respect to the second area 440 attached to the second housing 220 may be formed. For example, the second flat portion 421 may be inclined at a first angle with respect to the second area 440. For example, a portion of the third display area 263 supported by the fourth plate 252 in the unfolded state 700a may be inclined with respect to the third area 450, based on rotation of the fourth plate 252 with respect to the fourth rotation axis 740. As the fourth plate 252 rotates at an angle greater than about 90 degrees, a third flat portion 422 inclined with respect to the third area 450 attached to the third housing 230 may be formed. For example, the third flat portion 422 may be inclined at a second angle with respect to the third area 450. In the folded state 700b, at least a portion of the second flat portion 421 may be supported by the third plate 251, and at least a portion of the third flat portion 422 may be supported by the fourth plate 252.

According to an embodiment, when the electronic device 101 is changed from the unfolded state 700a to the folded state 700b, or from the folded state 700b to the unfolded state 700a, a second angular range A2 in which a second hinge plates (e.g., the third plate 251 and the fourth plate 252) rotate with respect to the second hinge bracket 253 may be greater than 180 degrees. The second angular range A12 may be referred to as the sum of the rotation angle of the third plate 251 and the rotation angle of the fourth plate 252.

According to an embodiment, when the electronic device 101 is changed from the unfolded state 700a to the folded state 700b, or from the folded state 700b to the unfolded state 700a, a first angular range (e.g., the first angular range A1 of FIG. 6) in which first hinge plates (e.g., the first plate 241 and the second plate 242 of FIG. 6) rotate with respect to a first hinge bracket (e.g., the first hinge bracket 243 of FIG. 6) may be smaller than the second angular range A2 in which second hinge plates (e.g., the third plate 251 and the fourth plate 252) rotate with respect to the second hinge bracket 253. As described above, the first angular range A1 may be about 180 degrees. The second angular range A2 may be greater than 180 degrees. In the folded state, the first angular range A1 of the first hinge plates may be relatively small, in order to form a space for a third housing (e.g., the third housing 230 of FIG. 4A) located between a first housing (e.g., the first housing 210 of FIG. 4A) and a second housing (e.g., the second housing 220 of FIG. 4A). In the folded state, the second angular range A2 of the second hinge plates may be relatively large, in order to form a shape (e.g., the water droplet shape or the dumbbell shape) of the flexible display 260 to reduce stress. For example, a third angle in the folded state (e.g., the state 600b in FIG. 6) between a first direction (e.g., a first direction 601 of FIG. 6A) toward which a surface (e.g., the surface 241a of FIG. 6) of the first plate 241 faces and a second direction (e.g., the second direction 602 of FIG. 6A) toward which a surface (e.g., the surface 242a of FIG. 6) faces may be different from a fourth angle in the folded state (e.g., the state 700b in FIG. 7A) between the third direction 710 toward which the surface 251a of the third plate 251 faces and the fourth direction 720 toward which the surface 252a of the fourth plate 252 faces. For example, the third angle may be about 180 degrees, and the fourth angle may be greater than 180 degrees.

In the folded state 700b of the electronic device 101, a portion between the second flat portion 421 and the third flat portion 422 may be curved. As the third plate 251 and the fourth plate 252 are rotated, a gap between the third plate 251 and the fourth plate 252 may be widened, and a portion not supported by the third plate 251 and the fourth plate 252 may be curved, thereby forming a third curved portion 423.

Referring to FIG. 7B, when the second deformable area 420 is at least partially curved, a curvature of the third curved portion 423 with respect to the second area 440 and the third area 450, which are flat, may be relatively reduced by the second flat portion 421 and the third flat portion 422.

An electronic device 701 according to a comparative example illustrated in FIG. 7B represents an electronic device having a structure in which the third plate 251 and the fourth plate 252 are disposed parallel to each other in the folded state. The electronic device 101 according to an embodiment illustrated in FIG. 7B represents an electronic device having a structure in which the third plate 251 and the fourth plate 252 are disposed to be inclined with respect to each other in the folded state.

Referring to FIG. 7B, in the electronic device 701 according to the comparative example, as the third plate 251 and the fourth plate 252 are disposed parallel to each other, a curvature of the third curved portion 423 may be formed between the second area 440 and the third area 450. Since a radius of curvature corresponding to the curvature may be determined based on a distance 750 between the second area 440 and the third area 450, the radius of curvature may be relatively small. Since the radius of curvature is relatively small, the curvature may be relatively large. In the folded state of the electronic device 101, since the curvature of the third curved portion 423 is relatively large, the stress applied to the flexible display 260 may be relatively large.

In the electronic device 101 according to an embodiment, as the third plate 251 and the fourth plate 252 are disposed to be inclined with each other, the curvature of the third curved portion 423 may be formed between the second flat portion 421 and the third flat portion 422. At a point where the flexible display 260 begins to be curved between the third flat portion 422 and a fourth flat portion, a radius of curvature corresponding to the curvature may be determined based on a distance 760 between the third flat portion 422 and the fourth flat portion. Since the distance 760 between the second flat portion 421 and the third flat portion 422 is relatively large, the radius of curvature may be relatively large. Since the radius of curvature is relatively large, the curvature may be relatively small. In the folded state of the electronic device 101, since the curvature of the third curved portion 423 is relatively small, the stress applied to the flexible display 260 may be relatively small. According to an embodiment, the durability of the flexible display 260 may be improved. For example, wrinkles that may be caused by the folding of the flexible display 260 may be reduced.

As described above, in the folded state, the first deformable area 410 and the second deformable area 420 may have different structures so that a structure in which the third housing 230 is located between the first housing 210 and the second housing 220 may be provided.

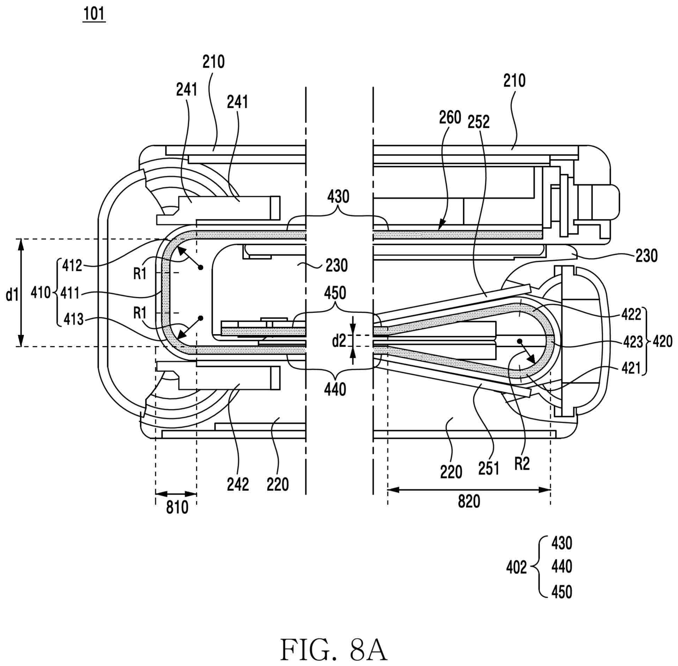

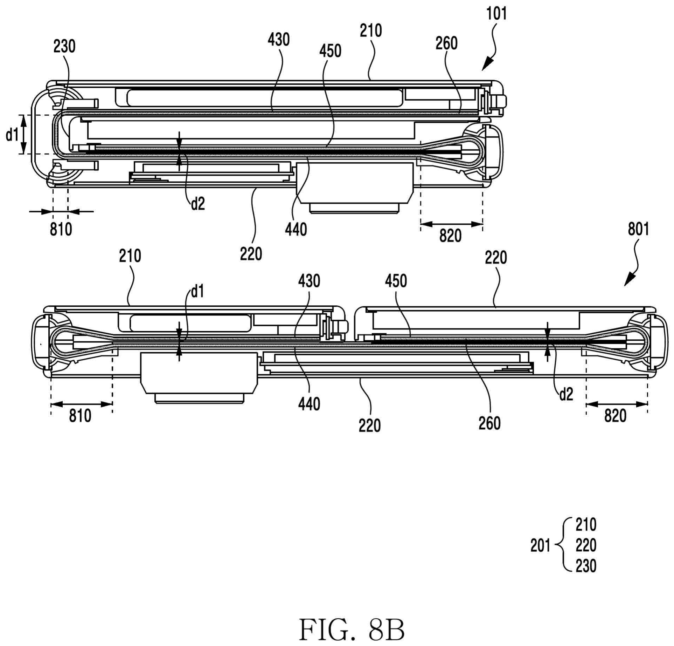

FIG. 8A is an enlarged view of a first deformable area and a second deformable area. FIG. 8B illustrates an electronic device according to an embodiment and an electronic device according to a comparative example.

Referring to FIG. 8A, in a first deformable area 410, a first curved portion 412 and a second curved portion 413 may be curved. The first curved portion 412 may be curved to have a first maximum curvature, and the second curved portion 413 may be curved to have a second maximum curvature. Since an operation of a first plate 241 and an operation of a second plate 242 are linked by a connecting gear, the first maximum curvature may be substantially the same as the second maximum curvature. In a second deformable area 420, a third curved portion 423 may be curved. The third curved portion 423 may be curved to have a third maximum curvature.

According to an embodiment, the first maximum curvature and/or the second maximum curvature may be different from the third maximum curvature. For example, the first maximum curvature and/or the second maximum curvature may be greater than the third maximum curvature. For example, a maximum curvature within the first curved portion 412 and/or the second curved portion 413 may be greater than a maximum curvature within the third curved portion 423. For example, a first radius of curvature R1 at a point where the maximum curvature is formed within the first curved portion 412 and/or the second curved portion 413 may be smaller than a second radius of curvature R2 at a point where the maximum curvature is formed within the third curved portion 423.

According to an embodiment, in the folded state, the first deformable area 410 may have a structure that may secure a maximum size of a display area of the flexible display 260 without the third housing 230 located between the first housing 210 and the second housing 220 interfering with the flexible display 260. As the first flat portion 411 is located between the first curved portion 412 and the second curved portion 413 having a relatively large curvature, a distance between the first area 430 and the second area 440 may be secured, and thus a space in which the second housing 220 is to be located may be formed in the folded state. As the first flat portion 411 is located between the first curved portion 412 and the second curved portion 413, a size of the flexible display 260 may be expanded. For example, in a case of a structure in which the first flat portion 411 is not formed, the third housing 230 may interfere with the flexible display 260, and/or a size (e.g., width) of the flexible display 260 may be reduced.

According to an embodiment, in the folded state, the second deformable area 420 may have a structure capable of providing a compact foldable housing 201 and securing maximally a size of a display area of the flexible display 260. As the third curved portion 423 is located between the second flat portion 421 and the third flat portion 422, a size of the flexible display 260 may be expanded. As the third curved portion 423 is curved between the second flat portion 421 and the third flat portion 422, a curvature of the third curved portion 423 may be relatively reduced. For example, in a case of a structure in which the second flat portion 421 and the third flat portion 422 are not formed, the size of the flexible display 260 may be reduced or/or the curvature of the second curved portion 413 may be relatively increased, thereby increasing stress applied to the flexible display 260.

According to an embodiment, a first width 810 of the first deformable area 410 in a direction perpendicular to the undeformed area 402 may be narrower than a second width 820 of the second deformable area 420 in the direction. However, it is not limited thereto.

According to an embodiment, in the folded state, a gap d1 between the first area 430 and the second area 440 may be different from a gap d2 between the second area 440 and the third area 450. For example, the gap d1 may be greater than the gap d2.

An electronic device 801 according to a comparative example illustrated in FIG. 8B schematically illustrates an electronic device having a structure in which the gap d1 between the first area 430 and the second area 440 is substantially the same as or similar to the gap d2 between the second area 440 and the third area 450. When the gap d1 is substantially the same as or similar to the gap d2, a folded structure of the foldable housing 201 may be changed. For example, when the gap d1 and the gap d2 are substantially the same, the first housing 210 and the third housing 230 may be placed over the second housing 220 in the folded state. For example, when the first housing 210 and the third housing 230 are folded inward with respect to the second housing 220, the first housing 210 and the second housing 220 may be disposed on substantially the same plane. In a case of the electronic device 810 according to the comparative example, the first width 810 and the second width 820 may be substantially the same or similar.

A size of the electronic device 801 according to the comparative example may be relatively large in the folded state. For example, when the electronic device 801 according to the comparative example is changed from the unfolded state to the folded state, a size of the second housing 220 may be greater than or equal to a size of the first housing 210 and a size of the third housing 230, so that the first housing 210 and the third housing 230 may be placed over the second housing 220. In a case of the electronic device 801 according to the comparative example, a size in the folded state may be about 1/2 of a size in the unfolded state.

In a case of the electronic device 101 according to an embodiment, the first width 810 and the second width 820 may be different from each other. For example, the first width 810 may be narrower than the second width 820. In the folded state, due to the structure, a size of the electronic device 101 according to the embodiment may be relatively smaller than the size of the electronic device 801 according to the comparative example. When the electronic device 101 according to an embodiment is changed from the unfolded state to the folded state, since the third housing 230 is located between the first housing 210 and the second housing 220, the first housing 210, the second housing 220, and the third housing 230 may at least partially overlap. In the case of the electronic device 101 according to an embodiment, a size in the folded state may be about 1/3 of a size in the unfolded state.

According to an embodiment, a structure in which the first width 810 is different from the second width 820 may enable the foldable housing 201 to be compact, in the folded state. For example, when the electronic device 101 is changed from the unfolded state to the folded state, the size of the electronic device 101 may be reduced by about 1/3, so the electronic device 101 may have improved portability. The electronic device 101 according to an embodiment may provide a compact structure and provide the flexible display 260 of a large screen, according to a user's intention, thereby providing an improved user experience.

FIG. 9A is a cross-sectional view of an electronic device according to an embodiment including a second deformable area in an unfolded state. FIG. 9B is a cross-sectional view of an electronic device according to an embodiment including a second deformable area in a folded state.

Referring to FIGS. 9A and 9B, when a state of an electronic device 101 according to an embodiment is changed, a rotation angle of a third plate 251 and a rotation angle of a fourth plate 252 may be different from a rotation angle of a second housing 220 and a rotation angle of a third housing 230.

Referring to FIG. 9A, in an unfolded state, the third plate 251 and the fourth plate 252 may be disposed on substantially the same plane. In the unfolded state, the second housing 220 and the third housing 230 may be disposed on substantially the same plane. For example, in the unfolded state, a surface 251a of the third plate 251 and a surface 252a of the fourth plate 252 face substantially the same direction, an angle between the surface 251a and the surface 252a may be substantially about 180 degrees. For example, in a folded state, since a surface 220a of the second housing 220 and a third surface 230a of the third housing 230, which face the flexible display 260, face substantially the same direction, an angle between the surface 220a and the third surface 230a may be substantially about 180 degrees.

Referring to FIG. 9B, when the electronic device 101 is changed from the unfolded state to the folded state, a rotation angle of the second housing 220 and/or a rotation angle of the third housing 230 may be different from a rotation angle of the third plate 251 and/or a rotation angle of the fourth plate 252. According to the difference in the rotation angle, the second deformable area 420 may be curved in a water droplet shape (or a dumbbell shape) in the folded state.

For example, in the folded state, the third plate 251 may be inclined without being parallel to the fourth plate 252. For example, in the folded state, a direction in which the surface 251a of the third plate 251 faces and a direction in which the surface 252a of the fourth plate 252 faces may have a slope with respect to each other without facing opposite directions each other. For example, an angle (e.g., an angle A of FIG. 9B) between a virtual straight line parallel to the surface 251a of the third plate 251 and a virtual straight line parallel to the surface 252a of the fourth plate 252 may be an acute angle less than 90 degrees.

For example, when the electronic device 101 is changed from the unfolded state to the folded state, a rotation angle of the second housing 220 and a rotation angle of the third housing 230 may be within a first angular range. For example, the second housing 220 and/or the third housing 230 may rotate to a folded state in which the second housing 220 and the third housing 230 are disposed side by side with each other, from an unfolded state in which the second housing 220 and the third housing 230 are disposed side by side on substantially the same plane. In the unfolded state, an angle between the surface 220a of the first housing 210 and the third surface 230a of the second housing 220 may be about 180 degrees. In the folded state, since the surface 220a of the first housing 210 and the third surface 230a of the second housing 220 are parallel to each other, an angle between the surface 220a and the surface 230a may be substantially about 0 degrees.

For example, when the electronic device 101 is changed from the unfolded state to the folded state by an external force (e.g., a force applied by a user), the second housing 220 and the third housing 230 may be rotated. For example, the second housing 220 and the third housing 230 may be rotated by about 90 degrees by the external force, respectively. For example, when the electronic device 101 is changed from the unfolded state to the folded state, the sum of the rotation angle of the second housing 220 and the rotation angle of the third housing 230 may be about 180 degrees. For example, the first angular range may be about 0 degrees to about 180 degrees.

For example, when the electronic device 101 is changed from the unfolded state to the folded state, the rotation angle of the third plate 251 and the rotation angle of the fourth plate 252 may be within a second angular range, which is greater than the first angular range. For example, the third plate 251 and the fourth plate 252 may rotate to a folded state in which the third plate 251 and the fourth plate 252 are inclined with respect to each other, from un unfolded state in which the third plate 251 and the fourth plate 252 are disposed side by side on substantially the same plane. In the unfolded state, an angle between the surface 251a of the third plate 251 and the surface 252a of the fourth plate 252 may be about 180 degrees. In the folded state, the surface 251a of the third plate 251 and the surface 252a of the fourth plate 252 may form an acute angle (e.g., the angle A of FIG. 9B) with respect to each other.

For example, when the electronic device 101 is changed from the unfolded state to the folded state, each of the third plate 251 and the fourth plate 252 may have a slope with respect to each other, by rotating by an angle (e.g., an angle C of FIG. 9B) greater than 90 degrees. For example, as illustrated in FIG. 9B, when the electronic device 101 is changed from the unfolded state to the folded state, each of the third plate 251 and the fourth plate 252 may rotate by an x degree (e.g., 100 degrees) greater than 90 degrees. An angle (e.g., the angle A of FIG. 9B) between a virtual straight line parallel to the surface 251a of the third plate 251 and the virtual straight line parallel to the surface 252a of the fourth plate 252 may be 2x-180 degrees (e.g., 20 degrees). For example, when the electronic device 101 is changed from the unfolded state to the folded state, the sum of a rotation angle of the third plate 251 and a rotation angle of the fourth plate 252 may be greater than 180 degrees. For example, the second angular range may be about 0 degrees to about 2 x degrees (e.g., 200 degrees). However, it is not limited thereto.

For example, the electronic device 101 may be changed from the unfolded state to the folded state by rotation of the third plate 251 and/or the fourth plate 252. Since a rotation angular range of the third plate 251 and the fourth plate 252 is different from a rotation angular range of the second housing 220 and the third housing 230, the electronic device 101 according to an embodiment may provide a structure in which a curvature change of the second deformable area 420 is gentle, in the folded state. For example, in the folded state, when the third plate 251 and the fourth plate 252 face each other, a curvature of the flexible display 260 supported by the third plate 251 and the fourth plate 252 may rapidly change between the third plate 251 and the fourth plate 252. For example, in the folded state, since the third plate 251 and the fourth plate 252 are inclined with respect to each other, a curvature change of the flexible display 260 may be gentle. Since the curvature of the flexible display 260 is gradually changed, damage to the flexible display 260 may be reduced. For example, in the folded state, the formation of wrinkle in an area (e.g., the second deformable area 420 of FIG. 5A) where the flexible display 260 is folded may be reduced.

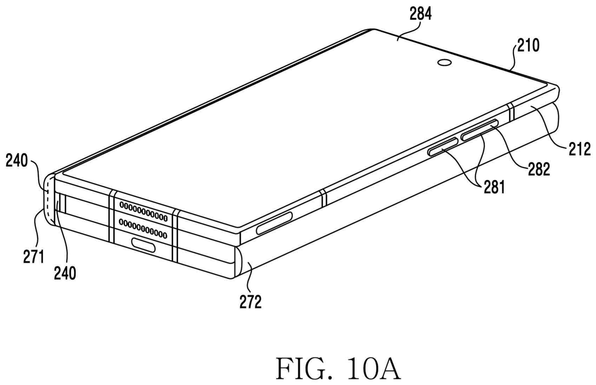

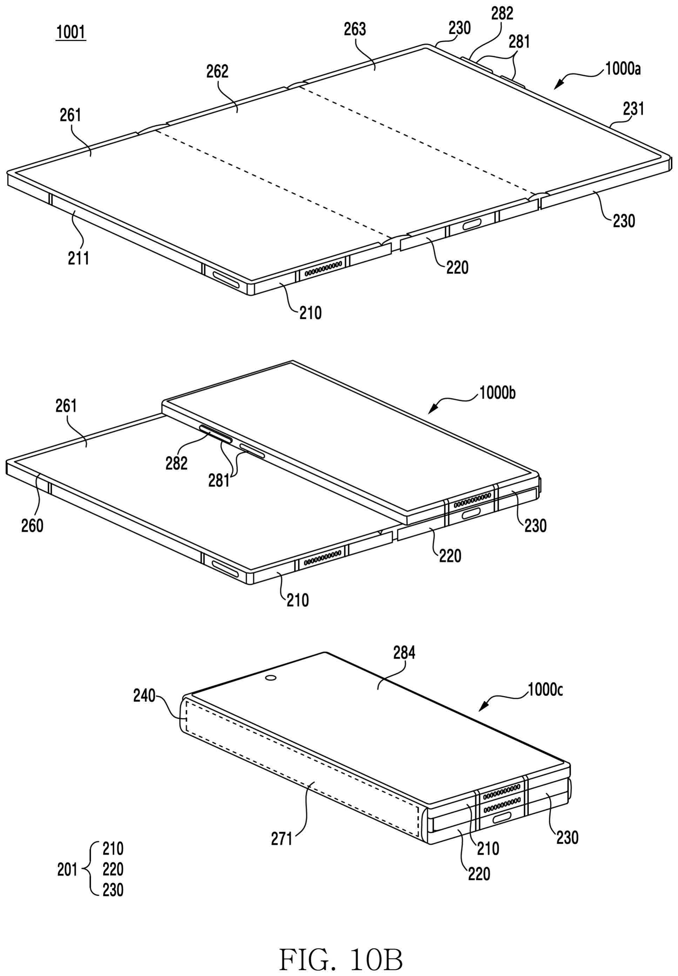

FIG. 10A is a perspective view of an electronic device according to an embodiment. FIG. 10B illustrates an electronic device according to a comparative example.

Referring to FIG. 10A, an electronic device 101 may include a key button 281 and/or a fingerprint recognition part 282. The key button 281 may be used to receive a user input. For example, the electronic device 101 may be in an inactive state. For example, the inactive state, which is a state in which a power management integrated circuit (PMIC) of the electronic device 101 ceases to provide power, may be referred to as a turn-off state requiring booting to switch to an active state. The inactive state may be referred to as an idle state, a standby state, or a low power state. A user may press the key button 281 to switch the electronic device 101 from the inactive state to the active state. A processor may be configured to switch the electronic device 101 from the inactive state to the active state, based on identifying a user input with respect to the key button 281. For example, as the electronic device 101 is switched from the inactive state to the active state, a cover display 284 may be configured to display visual information. In addition, the key button 281 may be used to receive a designated user input. For example, the key button 281 may be used to receive a user input for adjusting volume of an audio signal outputted from a speaker.

The fingerprint recognition part 282 may be used to identify a designated user of the electronic device 101. When a finger is in contact with the fingerprint recognition part 282 by the user, the fingerprint recognition part 282 may provide data indicating a pattern of a fingerprint to a processor (e.g., the processor 120 of FIG. 1). The processor may be configured to identify whether a first pattern of a fingerprint identified through the data corresponds to a second pattern of a fingerprint registered in memory. According to an embodiment, the fingerprint recognition part 282 may be implemented with a method using the key button 281. For example, the processor may be configured to identify whether the first pattern of the fingerprint identified through the key button 281 corresponds to the second pattern of the fingerprint registered in the memory. The processor may be configured to perform an operation (e.g., unlock) allowing use of the electronic device 101, based on identifying the first pattern corresponding to the second pattern.

The electronic device 101 may be used in the folded state. For example, the electronic device 101 may provide visual information (e.g., images and/or videos) provided through the cover display 284, in the folded state. For example, the electronic device 101 may be configured to control a speaker to emit an audio signal, in the folded state.

According to an embodiment, the key button 281 and/or the fingerprint recognition part 282 may be disposed, so that the user may use the key button 281 and/or the fingerprint recognition part 282 in the folded state. For example, in the folded state, the key button 281 may be located to be exposed to the external side of the folded foldable housing 201 so that the user may press the key button 281.

According to an embodiment, the key button 281 and/or the fingerprint recognition part 282 may be disposed on a lateral side (e.g., a second lateral side 212 of FIG. 11) of the first housing 210 opposite to the first hinge assembly 240. For example, as a portion of the key button 281 and/or the fingerprint recognition part 282 is exposed to the lateral side 212 of the first housing 210, the user may use the key button 281 and/or the fingerprint recognition part 282 in the folded state. For example, in the folded state, the key button 281 and/or the fingerprint recognition part 282 may be located over the second hinge cover 272. In the folded state, the key button 281 and/or the fingerprint recognition part 282 may be opposite to the first hinge cover 271.

An electronic device 1001 according to a comparative example illustrated in FIG. 10B represents an electronic device in which the key button 281 and/or the fingerprint recognition part 282 are disposed on a lateral side 231 of the third housing 230. Referring to FIG. 10B, when the key button 281 and/or the fingerprint recognition part 282 are disposed on a lateral side (e.g., a fifth lateral side 231 of FIG. 11) of the third housing 230, the key button 281 and/or the fingerprint recognition part 282 may be exposed to the outside of the electronic device 101, in an unfolded state 1000a of the electronic device 101. In an intermediate state 1000b in which the third housing 230 is folded with respect to the second housing 220, the key button 281 and/or the fingerprint recognition part 282 may be exposed to the outside of the electronic device 101. Since the third housing 230 is located between the first housing 210 and the second housing 220 when the electronic device 101 is in a folded state 1000c, the lateral side 231 of the third housing 230 may be covered by the first hinge cover 271 and the first hinge assembly 240 without being exposed to the outside of the electronic device 101. Since the lateral side 231 of the third housing 230 is covered, the key button 281 and/or the fingerprint recognition part 282 may not be used.

According to an embodiment, the key button 281 and/or the fingerprint recognition part 282 may be disposed on the lateral side 212 of the first housing 210, in order for the key button 281 and/or the fingerprint recognition part 282 being used not only in the unfolded state, the intermediate state, but also in the folded state.

As described above, according to an embodiment, the electronic device 101 may include the foldable housing 201 with an inward folded scheme. In the unfolded state, the foldable housing 201 may be folded in order that the third housing 230 is folded inward with respect to the second housing 220 and then the first housing 210 is folded inward with respect to the second housing 220. In the third state, in order for the third housing 230 to be located between the first housing 210 and the second housing 220, a space in which the third housing 230 may be located between the first housing 210 and the second housing 220 may be required. Hereinafter, a structure of the electronic device 101 for providing the above-described folding scheme will be described.

FIG. 11 illustrates an electronic device according to an embodiment in a folded state.

Referring to FIG. 11, in a folded state, a first housing 210, a second housing 220, and a third housing 230 may overlap each other. For example, the third housing 230 may be located between the first housing 210 and the second housing 220. In the folded state, a space may be formed between the first housing 210 and the second housing 220, so that the third housing 230 may be located between the first housing 210 and the second housing 220.

In the folded state of the electronic device 101, a first hinge cover 271 may face a second hinge cover 272 with a foldable housing 201 interposed therebetween. For example, the first hinge cover 271 may be disposed on a side (e.g., in the -x direction) of the foldable housing 201, and the second hinge cover 272 may be disposed on another side (e.g., in the +x direction) of the foldable housing 201. The first hinge cover 271 may be opposite to the second hinge cover 272. The first housing 210 and the second housing 220 may partially surround the first hinge cover 271. For example, the first housing 210 and the second housing 220 may be rotated at an external side of the first hinge cover 271 when unfolded or folded. The second housing 220 and the third housing 230 may partially surround the second hinge cover 272. For example, the second housing 220 and the third housing 230 may rotate at an external side of the second hinge cover 272 when unfolded or folded.

As illustrated in FIG. 11, the first hinge cover 271 and the second hinge cover 272 may protrude from the foldable housing 201 in the folded state.

For example, in the folded state, the first housing 210 may include a first lateral side 211 adjacent to the first hinge cover 271 and a second lateral side 212 opposite to the first lateral side 211. At least one key button 281 and/or a fingerprint recognition part 282 may be exposed to the outside of the foldable housing 201, by protruding from the second lateral side 212. In the folded state, the second housing 220 may include a third lateral side 221 adjacent to the first hinge cover 271 and a fourth lateral side 222 opposite to the third lateral side 221. The fourth lateral side 222 may be adjacent to the second hinge cover 272. In the folded state, the third housing 230 may include a fifth lateral side 231 facing the first hinge cover 271 and a sixth lateral side 232 opposite to the fifth lateral side 231. The sixth lateral side 232 may be adjacent to the second hinge cover 272.

For example, the first hinge cover 271 may protrude from the first lateral side 211 and the third lateral side 221. For example, the first lateral side 211 and the third lateral side 221 may be substantially aligned in the folded state. That the first lateral side 211 and the third lateral side 221 are substantially aligned may be referred to as the first lateral side 211 and the third lateral side 221 being located on the same virtual line L1 in the folded state. A portion of the first hinge cover 271 protruding from the first lateral side 211 and the third lateral side 221 may protrude from about 2.0 mm to about 2.5 mm. For example, a distance (e.g., a first distance 1101) from an outer surface 271a of the first hinge cover 271 to the first lateral side 211 (or the third lateral side 221) may be about 2.3 mm, but is not limited thereto.

For example, an outer surface 272a of the second hinge cover 272 may protrude from the fourth lateral side 222 and the sixth lateral side 232. For example, the fourth lateral side 222 and the sixth lateral side 232 may be substantially aligned in the folded state. That the fourth lateral side 222 and the sixth lateral side 232 are substantially aligned may be referred to as the fourth lateral side 222 and the sixth lateral side 232 being located on the same virtual line L2 in the folded state. A portion of the second hinge cover 272 protruding from the fourth lateral side 222 and the sixth lateral side 232 may protrude from about 1.5 mm to about 2.0 mm. For example, a distance (e.g., a second distance 1102) from the outer surface 272a of the second hinge cover 272 to the fourth lateral side 222 (or the sixth lateral side 232) may be about 1.7 mm, but is not limited thereto.

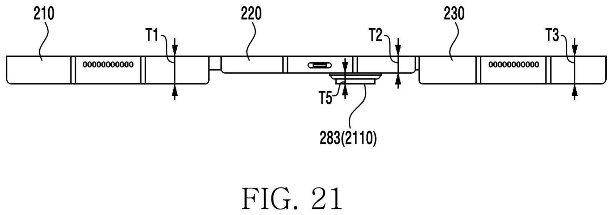

The first distance 1101 and the second distance 1102 may be different according to a structure of the electronic device 101. For example, according to a design of the first hinge assembly 240 and the second hinge assembly 250, and a thickness of the foldable housing 201, the first distance 1101 and the second distance 1102 may vary. The first distance 1101 and the second distance 1102 may be greater than zero. The first distance 1101 and the second distance 1102 may be smaller than a first thickness (e.g., a first thickness T1 of FIG. 21) of the first housing 210, a second thickness (e.g., a second thickness T2 of FIG. 21) of the second housing 220, and a third thickness (e.g., a third thickness T3 of FIG. 21) of the third housing 230.

According to an embodiment, a width of the first housing 210, a width of the second housing 220, and a width of the third housing 230 may be different from each other. In the present disclosure, a width may be referred to as a length in a direction perpendicular to a rotation axis of the foldable housing 201. The first housing 210 may have a first width W1. The second housing 220 may have a second width W2. The third housing 230 may have a third width W3.

According to an embodiment, in the folded state, when the third housing 230 is located between the first housing 210 and the second housing 220, the third width W3 may be narrower than the first width W1 and the second width W2 so that the third housing 230 does not interfere with the flexible display 260. Since the third width W3 is narrower than the first width W1 and the second width W2, the fifth lateral side 231 may not be aligned with the third lateral side 221 and the first lateral side 211 in the folded state. The fifth lateral side 231 may be spaced apart from a virtual line L1 connecting the first lateral side 211 and the third lateral side 221 in a direction (e.g., +x direction) toward the second hinge cover 272.

According to an embodiment, the first width W1 may be wider than the second width W2 and the third width W3. In the folded state, the second lateral side 212 of the first housing 210 may be substantially aligned with the outer surface 272a of the second hinge cover 272. That the first lateral side 211 and the outer surface 272a of the second hinge cover 272 is substantially aligned may be referred to as the first lateral side 211 and the outer surface 272a of the second hinge cover 272 being located on the same virtual line L3 in the folded state. When the second lateral side 212 is not substantially aligned with the outer surface 272a of the second hinge cover 272 and is located outside (e.g., in the +x direction) more than the outer surface 272a of the second hinge cover 272, since the first housing 210 protrudes outside, the first housing 210 may be easily damaged by impact. As the second lateral side 212 is substantially aligned with the outer surface 272a of the second hinge cover 272, the foldable housing 201 may be compact in the folded state. At least one key button 281 and/or the fingerprint recognition part 282 exposed through the second lateral side 212 may protrude from the virtual line L3, so that the user easily presses at least one key button 281 and/or the fingerprint recognition part 282.

For example, since the first lateral side 211 and the third lateral side 221 are substantially aligned, the second width W2 may correspond to a value obtained by subtracting the second distance 1102 from the first width W1. For example, when the first width W1 is about 67.2mm and the second distance 1102 is about 1.7mm, the second width W2 may be about 65.5mm (67.2mm - 1.7mm), but is not limited thereto.

For example, since a cap 320 (e.g., the first cap 321 and the second cap 322 of FIG. 2C) is disposed between a first frame (e.g., the first frame 311 of FIG. 2C) and a second frame (e.g., the second frame 312 of FIG. 2C), the cap 320 may be located close to the fifth lateral side 231 of the third housing 230 in the folded state. In the folded state, the fifth lateral side 231 of the third housing 230 may be spaced apart from the cap 320 (e.g., the protrusion 320a). In case that the fifth lateral side 231 contacts the protrusion 320a of the cap 320, when the third housing 230 is unfolded or folded, damage to the electronic device 101 may be caused by physical collision with the cap 320. As the fifth lateral side 231 is spaced apart from the cap 320, the damage may be prevented. For example, as the fifth lateral side 231 is spaced apart from the cap 320 in a direction (e.g., +x direction) toward the second hinge cover 272, a gap 1103 may be formed between the fifth lateral side 231 and the cap 320. For example, the gap 1103 may be less than or equal to about 3 mm (e.g., about 0.75 mm), but is not limited thereto.

For example, since the fourth lateral side 222 and the sixth lateral side 232 are substantially aligned, the third width W3 may correspond to a value obtained by subtracting a length of the cap 320 compared to the virtual line L1 and the gap 1103 between the fifth lateral side 231 and the cap 320 from the second width W2. For example, when the second width W2 is about 65.5 mm, the length of the cap 320 is about 2.5 mm, and the gap 1103 is about 0.8 mm, the third width W3 may be about 62.2 mm (65.5 mm - 2.5 mm - 0.8 mm), but is not limited thereto.

According to an embodiment, as the first housing 210, the second housing 220, and the third housing 230 have different widths, respectively, the foldable housing 201 having an inward folded structure may be formed. As the third housing 230 has a structure enabling it to be located between the first housing 210 and the second housing 220, the three housings may be stably folded or unfolded. When the first width W1, the second width W2, and the third width W3 are substantially the same, the foldable housing 201 may not be implemented, the usability of the electronic device 101 may be deteriorated, or the communication performance of the electronic device 101 may be deteriorated.

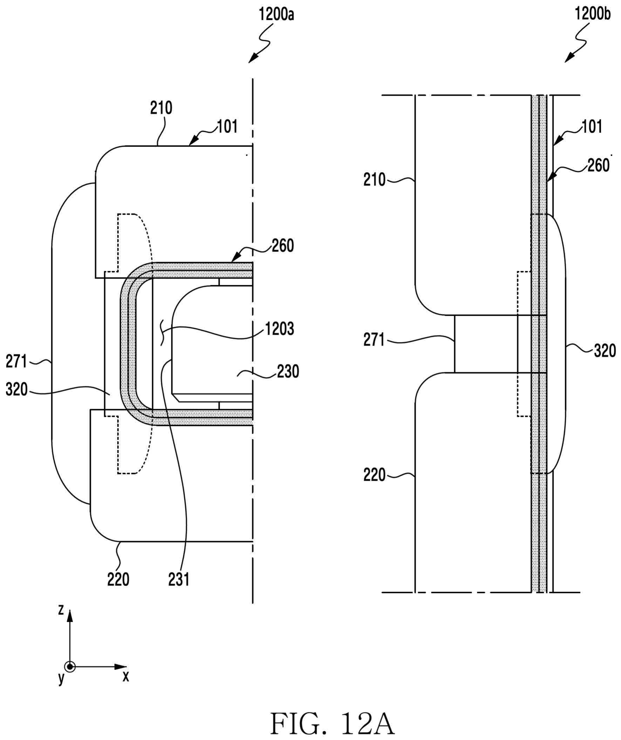

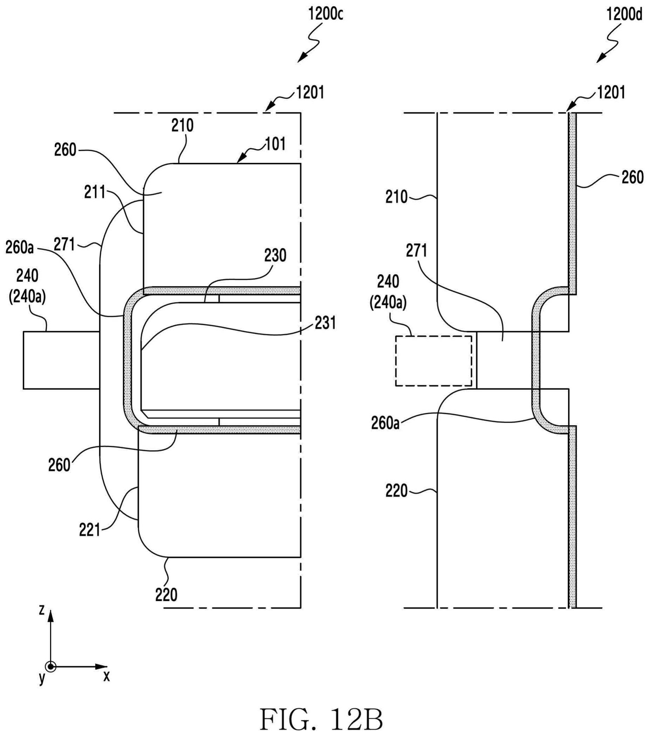

FIG. 12A illustrates a portion of an electronic device according to an embodiment. FIG. 12B illustrates a portion of an electronic device according to a comparative example.

A state 1200a of FIG. 12A represents a portion of an electronic device 101 according to an embodiment, in a folded state. A state 1200b of FIG. 12A represents a portion of the electronic device 101 according to an embodiment, in an unfolded state.

Referring to the state 1200a of FIG. 12A, as described above, in the folded state, a third housing 230 may be spaced apart from a cap 320 (e.g., the first cap 321 or the second cap 322 of FIG. 2C). For example, as a fifth lateral side 231 is spaced apart from the cap 320, a gap 1203 may be formed between the cap 320 and the fifth lateral side 231. In the folded state, a portion of a flexible display 260 may be at least partially curved. For example, a portion of the flexible display 260 disposed between a first housing 210 and a second housing 220 may be at least partially curved. In the folded state, the portion of the flexible display 260 may be at least partially located inside the cap 320. Since the fifth lateral side 231 of the third housing 230 is spaced apart from the cap 320, the fifth lateral side 231 may be spaced apart from the portion of the flexible display 260. The portion of the flexible display 260 may be referred to as the first deformable area 410 of FIG. 5A.

Referring to the state 1200b of FIG. 12A, as the first housing 210 and the second housing 220 are unfolded, the portion of the flexible display 260, which was curved, may be unfolded. In the unfolded state, the portion of flexible display 260 may be unfolded substantially flat. In the unfolded state, as the entire area of the flexible display 260 is substantially flat, a display area of the flexible display 260 may be formed to be substantially uniform. Since the display area may be uniformly formed, visibility of visual information displayed on the flexible display 260 may be secured.

A state 1200c of FIG. 12B represents a portion of the electronic device 1201 according to a comparative example in the folded state. A state 1200d of FIG. 12B represents a portion of the electronic device 1201 according to a comparative example in the unfolded state.

Referring to FIG. 12B, the electronic device 101 according to the comparative example may be referred to as an electronic device having a structure in which a third width (e.g., the third width W3 of FIG. 11) of the third housing 230 is substantially the same as a second width (e.g., the second width W2 of FIG. 11) of the second housing 220. When the third width W3 is substantially the same as the second width W2, the fifth lateral side 231 may be substantially aligned with a first lateral side 211 and a third lateral side 221. The electronic device 1201 according to the comparative example may be difficult to physically implement.

In a case of the same structure as the electronic device 1201 according to the comparative example, since the third width W3 of the third housing 230 is substantially the same as the second width W2 of the second housing 220, the fifth lateral side 231 may be substantially aligned with the first lateral side 211 and the third lateral side 221 in the folded state. As the fifth lateral side 231 is substantially aligned with the first lateral side 211 and the third lateral side 221, the flexible display 260 may be pushed inside (e.g., in the -x direction) the first hinge cover 271 to avoid contact with the third housing 230. Referring to the state 1200c of FIG. 12b, in the folded state, a portion 260a of the flexible display 260 may be recessed toward the first hinge cover 271 (e.g., in the -x direction), in order to avoid interference with the flexible display 260 and the third housing 230. As the portion 260a of the flexible display 260 is recessed, a portion 240a of the first hinge assembly 240 may have to be pushed out in a direction (e.g., in the -x direction) in which the third housing 230 extends. Referring to the state 1200d of FIG. 12B, when the portion 240a of the first hinge assembly 240 is pushed out, since the portion 240a is separated from another portion of the first hinge assembly 240 accommodated in the first hinge cover 271, it may be located in a location incapable of being physically implemented in the unfolded state. As such, the structure illustrated in the state 1200c of FIG. 12B cannot be physically implemented.

Even assuming that a structure such as the state 1200c of FIG. 12B may be physically implemented, the visibility of visual information displayed on the flexible display 260 may be deteriorated. Referring to the state 1200d of FIG. 12B, in the unfolded state of the electronic device 1201 according to the comparative example, the portion 260a of the flexible display 260, which is recessed, may maintain a recessed shape. When visual information is displayed on the recessed portion of the flexible display 260, since a surface of the flexible display 260 is uneven, a display area of the flexible display 260 may not be uniform. Since the display area may be formed unevenly, visual information displayed on the flexible display 260 may be distorted, and thus visibility may be deteriorated.

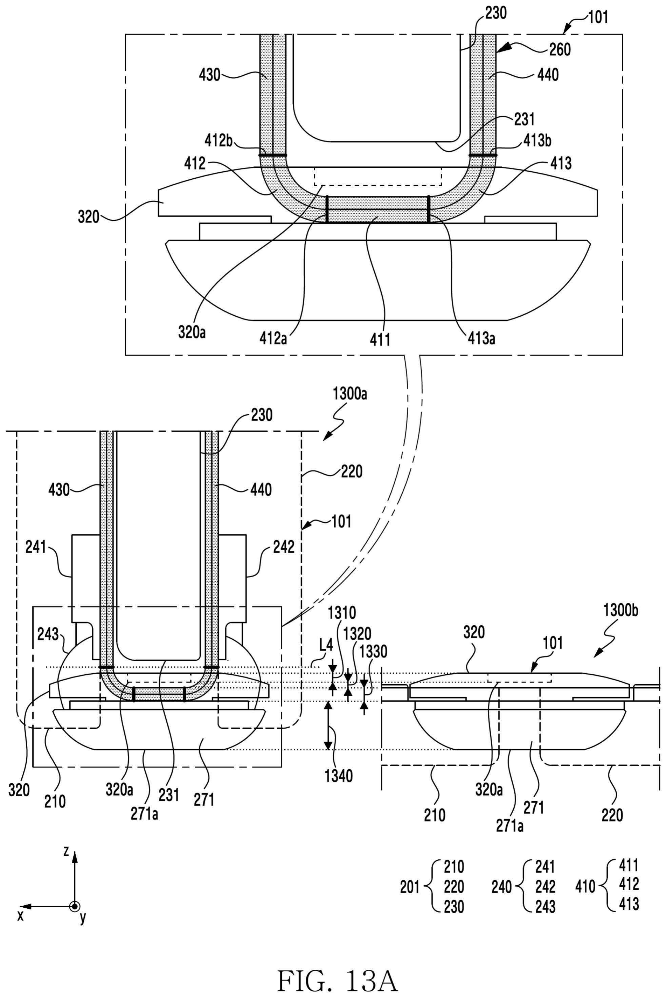

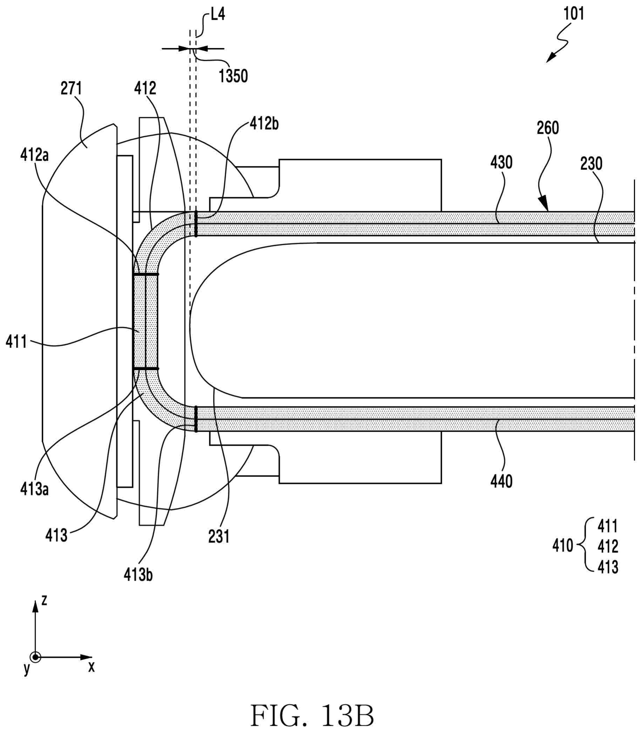

FIGS. 13A and 13B partially illustrate a first hinge assembly, a flexible display, and a third housing of an electronic device according to an embodiment.

A state 1300a of FIG. 13A illustrates a portion of an electronic device 101 according to an embodiment, in a folded state. A state 1300b of FIG. 13A illustrates a portion of the electronic device 101 according to an embodiment, in an unfolded state.

Referring to the state 1300a of FIG. 13A, a flexible display 260 may include a first deformable area (or deforming area) 410 to be deformed by a first hinge assembly 240 in the folded state.

For example, the first hinge assembly 240 may include first hinge plates (e.g., a first plate 241 and a second plate 242). Each of the first plate 241 and the second plate 242 may be rotatably connected to a first hinge bracket 243. The first plate 241 may be coupled to a first housing 210. The second plate 242 may be coupled to a second housing 220. The first housing 210 and the second housing 220 may be rotatably coupled to the first hinge bracket 243 by the first plate 241 and the second plate 242.

As described above, the first deformable area 410 may include a first curved portion 412, a second curved portion 413, and a first flat portion 411.

For example, the first flat portion 411 may be located between the first curved portion 412 and the second curved portion 413. The first curved portion 412 may be curved from a first end 412a of the first flat portion 411 to a second end 412b of the flexible display 260 (e.g., the first area 430 of FIG. 5A) disposed on the first housing 210. The second curved portion 413 may be curved from a third end 413a of the first flat portion 411 opposite the first end 412a to a fourth end 413b of an area (e.g., the second area 440 of FIG. 5A) of the flexible display 260 disposed on the second housing 220.

According to an embodiment, the first flat portion 411 may be substantially flat. The first flat portion 411 may be substantially perpendicular to the first housing 210 and the second housing 220.

For example, a protrusion (e.g., the protrusion 320a of FIG. 2C) of a cap 320 (e.g., the first cap 321 or the second cap 322 of FIG. 2C) protruding toward the flexible display 260 may be spaced apart from the flexible display 260. For example, a thickness 1310 of the protrusion 320a may be about 0.2mm or more (e.g., about 0.60mm). A gap 1320 between the first deformable area 410 and the protrusion 320a may be about 0.1 mm to about 1.0 mm (e.g., about 0.40 mm). For example, a thickness 1330 of the flexible display 260 may be about 0.74 mm. For example, a distance 1340 from the flexible display 260 to an outer surface 271a of a first hinge cover 271 may be about 3.06 mm. As described above, as a fifth lateral side 231 of a third housing 230 is spaced apart from the protrusion 320a of the cap 320, a gap may be formed between the fifth lateral side 231 and the cap 320. The gap may be about 3.0 mm or less (e.g., about 0.8 mm). A distance between the fifth lateral side 231 and the first flat portion 411 may be about 1.80 mm (e.g., 0.8 mm + 0.60 mm + 0.40 mm).

For example, a virtual line L4 extending from the second end 412b of the first curved portion 412 to the fourth end 413b of the second curved portion 413 may be spaced apart from the fifth lateral side 231, in order to prevent the flexible display 260 and the third housing 230 from interfering with each other. For example, the fifth lateral side 231 may be spaced apart from the virtual line L4 in a direction (e.g., +x direction) toward the second hinge cover 272. For example, a distance from the virtual line to the fifth lateral side 231 may be about 0.25 mm. When a corner of the third housing 230 includes an angled portion as illustrated in FIG. 6A, as the fifth lateral side 231 is spaced apart from the virtual line L4 toward the second hinge cover 272, interference between the flexible display 260 and the third housing 230 may be avoided. In this case, the third housing 230 may be spaced apart by about 0.30 mm from an area (e.g., a portion of the first display area 261) of the flexible display 260 disposed on the first housing 210, and spaced apart by about 0.30 mm from an area (e.g., a portion of the second display area 262) of the flexible display 260 disposed on the second housing 220.

Referring to FIG. 13B, when the corner of the third housing 230 is substantially rounded, a portion of the fifth lateral side 231 may be spaced apart from the virtual line L4, which extend from the second end 412b of the first curved portion 412 to the fourth end 413b of the second curved portion 413, toward the first hinge cover 271 (e.g., in the -x direction). Referring to FIG. 13B, the corner of the third housing 230 may not be flat and may be rounded. In case that the fifth lateral side 231 is rounded, since an area interfering with the flexible display 260 may be reduced when the third housing 230 is rotated, a portion of the fifth lateral side 231 may protrude from the virtual line L4 toward the first hinge cover 271 (e.g., in the -x direction). For example, a distance 1550 from the virtual line L4 to the fifth lateral side 231 may be about 0.25 mm. In this case, the third housing 230 may be spaced apart by about 0.40 mm from an area (e.g., the first area 430) of the flexible display 260 disposed on the first housing 210, and spaced apart by about 0.40 mm from an area (e.g., a portion of the second area 440) of the flexible display 260 disposed on the second housing 220.

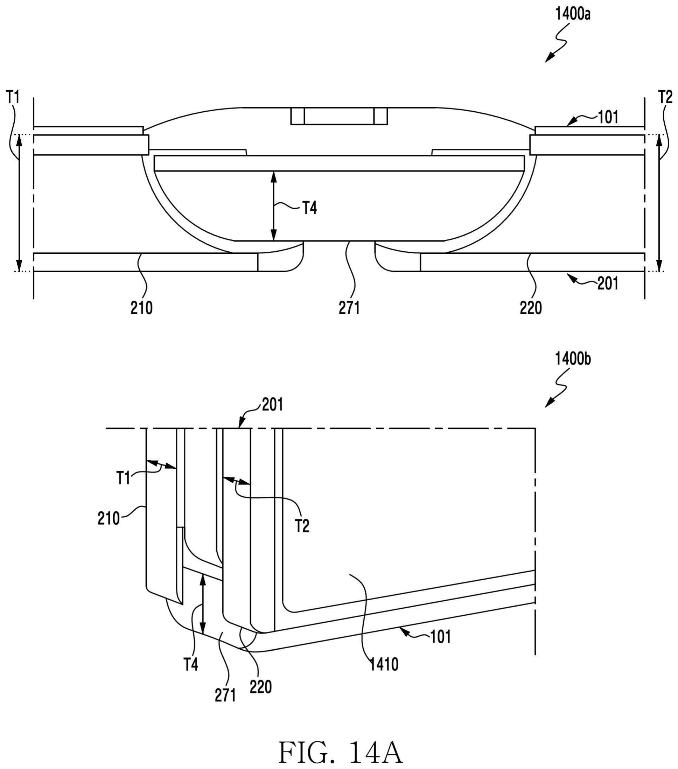

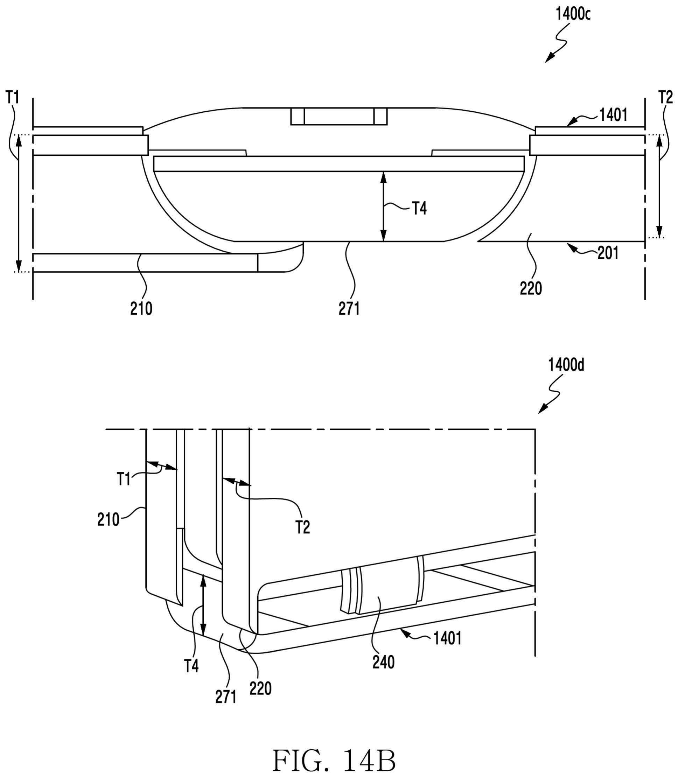

FIG. 14A illustrates a portion of an electronic device according to an embodiment. FIG. 14B illustrates a portion of an electronic device according to a comparative example.

Referring to FIG. 14A, a thickness of a foldable housing 201 of an electronic device 101 according to an embodiment may be thicker than a thickness of a first hinge cover 271 and a thickness of a second hinge cover 272. For example, a first thickness T1 of a first housing 210 and a second thickness T2 of a second housing 220 may be thicker than a fourth thickness T4 of the first hinge cover 271 located between the first housing 210 and the second housing 220.

A state 1400a of FIG. 14A represents a portion of the electronic device 101 according to an embodiment in an unfolded state. A state 1400b of FIG. 14A represents a portion of the electronic device 101 according to an embodiment in an unfolded state.

Referring to the state 1400a of FIG. 14A, since the first thickness T1 and the second thickness T2 are thicker than the fourth thickness T4, the first housing 210 and the second housing 220 may protrude from the first hinge cover 271 in the unfolded state. For example, when the electronic device 101 in the unfolded state is placed on a floor, the first housing 210 and the second housing 220 may touch the floor, and the first hinge cover 271 may be spaced apart from the floor. Referring to the state 1400a of FIG. 14A, the first housing 210 and the second housing 220 may partially surround the first hinge cover 271. The first hinge cover 271 may be partially exposed between the first housing 210 and the second housing 220.

Referring to the state 1400b of FIG. 14A, in the unfolded state, as the first housing 210 and the second housing 220 are rotated to face each other, an exposed portion of the first hinge cover 271 may increase. The first housing 210 and the second housing 220 may be rotated outside the first hinge cover 271. Since the first thickness T1 and the second thickness T2 are thicker than the fourth thickness T4, a first hinge assembly (e.g., the first hinge assembly 240 of FIG. 14B) accommodated in the first hinge cover 271 may be covered by the first housing 210 and the second housing 220. When the foldable housing 201 includes a cover plate 1410 covering a rear surface of the first housing 210 and a rear surface of the second housing 220, in the folded state, the first hinge assembly (e.g., the first hinge assembly 240 of FIG. 14B) may be covered by the cover plate. In the unfolded state, the first hinge assembly 240 may be protected by covering the first housing 210 and the second housing 220. The above descriptions may be applied substantially the same to a second hinge assembly (e.g., the second hinge assembly 250 of FIG. 4A) located between the second housing 220 and a third housing (e.g., the third housing 230 of FIG. 4A).

A state 1400c of FIG. 14B illustrates a portion of an electronic device 1401 according to a comparative example in the unfolded state. A state 1400d of FIG. 14B illustrates a portion of the electronic device 1401 according to the comparative example in the unfolded state.

The electronic device 1401 according to the comparative example may be referred to as an electronic device having a structure in which a thickness of at least a portion of the foldable housing 201 is not thicker than a thickness of the first hinge cover 271 and/or a thickness of the second hinge cover 272. For example, as illustrated in FIG. 14B, in the electronic device 1401 according to the comparative example, the second thickness T2 may be less than or equal to the fourth thickness T4.

Referring to the state 1400c of FIG. 14B, since the second thickness T2 is less than or equal to the fourth thickness T4, the first hinge cover 271 may protrude more than the second housing 220 and the first hinge cover 271, in the unfolded state. An outer surface 271a of the first hinge cover 271 may be located at substantially the same location as a rear surface of the second housing 220 or may protrude from the rear surface of the second housing 220.

Referring to the state 1400d of FIG. 14B, in the unfolded state, as the first housing 210 and the second housing 220 are rotated to face each other, an exposed portion of the first hinge cover 271 may increase. The first housing 210 and the second housing 220 may be rotated outside the first hinge cover 271. Since the second thickness T2 is less than or equal to the fourth thickness T4, the first hinge assembly 240 accommodated in the first hinge cover 271 may be exposed through the rear surface of the second housing 220. As the first hinge assembly 240 is exposed in the unfolded state, the first hinge assembly 240 may not be protected and may be damaged. For example, as foreign substances are introduced inside the first hinge assembly 240, connecting gears of the first hinge assembly 240 may be damaged or the operability of the first hinge assembly 240 may be deteriorated.

According to an embodiment, since a thickness of the foldable housing 201 is thicker than a thickness of the first hinge cover 271 and a thickness of the second hinge cover 272, the first hinge assembly 240 and the second hinge assembly 250 may be protected. Since the first hinge assembly 240 and the second hinge assembly 250 are not exposed, the first hinge assembly 240 and the second hinge assembly 250 may be protected, not only in the folded state but also in the unfolded state. According to an embodiment, the operability of the first hinge assembly 240 and the operability of the second hinge assembly 250 may be stably guaranteed.

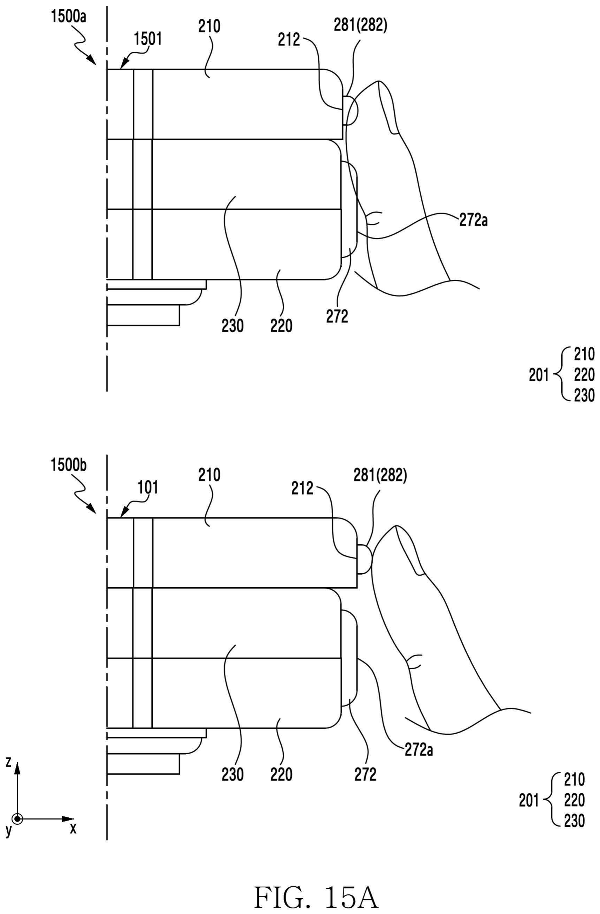

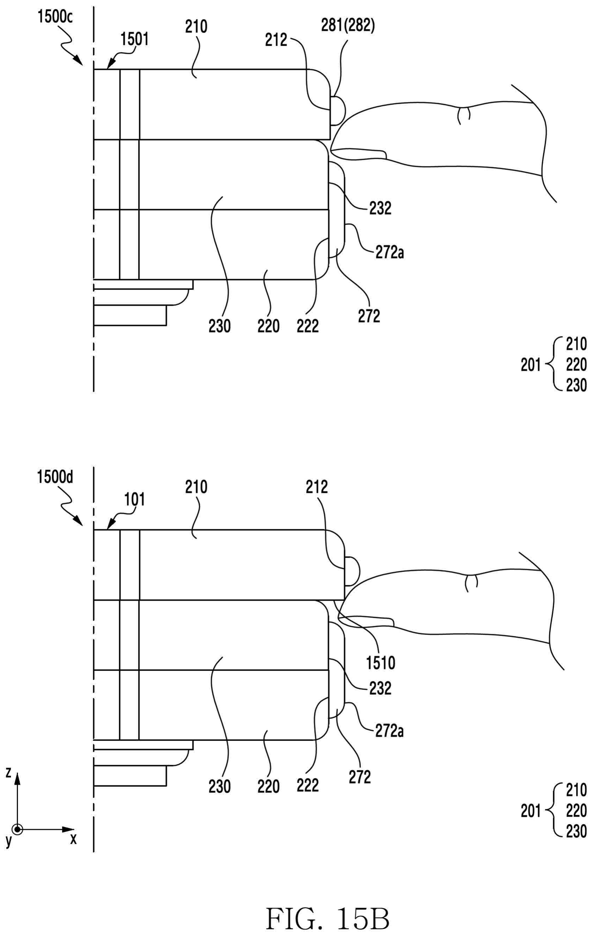

FIG. 15A is a diagram illustrating usability of at least one key button or a fingerprint recognition part of an electronic device, according to a width of a first housing. FIG. 15B is a diagram illustrating ease of an unfolding operation of an electronic device, according to a width of a first housing.

As described above, in a case of the electronic device 101 according to an embodiment, a first width (e.g., the first width W1 of FIG. 11) of the first housing 210 may be formed to be wider than a second width (e.g., the second width W2 of FIG. 11) of the second housing 220 and a third width (e.g., the third width W3 of FIG. 11) of the third housing 230. The electronic device 101 according to an embodiment having a structure in which the first width W1 is wider than the second width W2 and the third width W3 may provide improved usability of at least one key button 281 and/or a fingerprint recognition part 282.

The 1500a of FIG. 15A represents an electronic device 1501 according to a comparative example having a structure in which the first width W1 of the first housing 210 is not wider than the second width W2 of the second housing 220 and the third width W3 of the third housing 230. In the electronic device 1501 according to the comparative example, since the first width W1 is not wider than the second width W2 and the third width W3, a second lateral side 212 of the first housing 210 may be located inside (e.g., in the -x direction) of an outer surface 272a of the second hinge cover 272 in the folded state. The at least one key button 281 and/or the fingerprint recognition part 282 exposed through the second lateral side 212 may be located inside the outer surface 272a of the second hinge cover 272. Since the at least one key button 281 and/or the fingerprint recognition part 282 is located inside of the outer surface 272a of the second hinge cover 272, the usability of the at least one key button 281 and/or the fingerprint recognition part 282 may be deteriorated. For example, when a user presses the at least one key button 281 and/or the fingerprint recognition part 282, as the outer surface 272a of the second hinge cover 272 is first contacted by the finger, it may be difficult for the user to press the at least one key button 281 and/or the fingerprint recognition part 282.

The 1500b of FIG. 15A represents the electronic device 101 according to an embodiment having a structure in which the first width W1 of the first housing 210 is wider than the second width W2 of the second housing 220 and the third width W3 of the third housing 230. In the electronic device 101 according to an embodiment, the first width W1 may be wider than the second width W2 and the third width W3. The second lateral side 212 of the first housing 210 may be substantially aligned with the outer surface 272a of the second hinge cover 272.

Referring to the 1500b of FIG. 15A, since the second lateral side 212 is substantially aligned with the outer surface 272a of the second hinge cover 272, the at least one key button 281 and/or the fingerprint recognition part 282 exposed through the second lateral side 212 may be located outside (e.g., in the +x direction) of the outer surface 272a of the second hinge cover 272 in the folded state. Since the at least one key button 281 and/or the fingerprint recognition part 282 are located outside of the outer surface 272a of the second hinge cover 272, the usability of the at least one key button 281 and/or the fingerprint recognition part 282 may be improved. For example, the user may easily press the at least one key button 281 and/or the fingerprint recognition part 282 exposed through the second lateral side 212 with a finger.

According to an embodiment, since the first width W1 is formed to be wider than the second width W2 and the third width W3, the usability of the at least one key button 281 and/or the fingerprint recognition part 282 may be improved. The electronic device 101 according to an embodiment may provide an improved user experience.

According to an embodiment, the electronic device 101 according to an embodiment having a structure in which the first width W1 is wider than the second width W2 and the third width W3 may provide ease of unfolding operation.

The 1500c of FIG. 15B represents the electronic device 1501 according to a comparative example having a structure in which the first width W1 of the first housing 210 is not wider than the second width W2 of the second housing 220 and the third width W3 of the third housing 230. In the electronic device 1501 according to the comparative example, since the first width W1 is not wider than the second width W2 and the third width W3, the second lateral side 212 of the first housing 210 may be substantially aligned with the sixth lateral side 232 of the third housing 230 in the folded state. As the second lateral side 212 is substantially aligned with the sixth lateral side 232, a step 1510 between the first housing 210 and the third housing 230 may not be substantially formed. In order for the user to change the electronic device 1501 in the folded state to the unfolded state, the first housing 210 may have to be unfolded first. In a case of the electronic device 1501 according to a comparative example in which the step 1510 is not formed, it may be difficult to unfold the first housing 210. For example, in a case of the electronic device 1501 according to a comparative example, it may be difficult to unfold the first housing 210. For example, since the user cannot locate a finger between the first housing 210 and the third housing 230 to provide an external force for unfolding the first housing 210 as the second lateral side 212 and the sixth lateral side 232 are aligned with each other, it may be difficult to unfold the first housing 210. The electronic device 1501 according to the comparative example may not provide ease of an unfolding operation.

The 1500d of FIG. 15A represents the electronic device 101 according to an embodiment having a structure in which the first width W1 of the first housing 210 is wider than the second width W2 of the second housing 220 and the third width W3 of the third housing 230. For example, since the first width W1 is wider than the third width W3, the step 1510 may be formed due to a difference between the first width W1 and the third width W3. In the folded state, the step 1510 may be formed between the first housing 210 and the second hinge cover 272. The step 1510 may be formed between the first housing 210 and the third housing 230. The step 1510 may protrude in the +x direction more than the fourth lateral side 222 and the sixth lateral side 232. The step 1510 may be located over the second hinge cover 272 (e.g., in the +z direction).

Referring to 1500d of FIG. 15A, in the folded state, since the step 1510 is formed between the first housing 210 and the second housing 220, the electronic device 101 according to an embodiment may provide ease of unfolding operation. For example, the user may easily unfold the first housing 210 by applying an external force to the step 1510 between the first housing 210 and the second housing 220 with a finger.

According to an embodiment, since the first width W1 is formed to be wider than the second width W2 and the third width W3, ease of unfolding may be improved. The electronic device 101 according to an embodiment may provide an improved user experience.

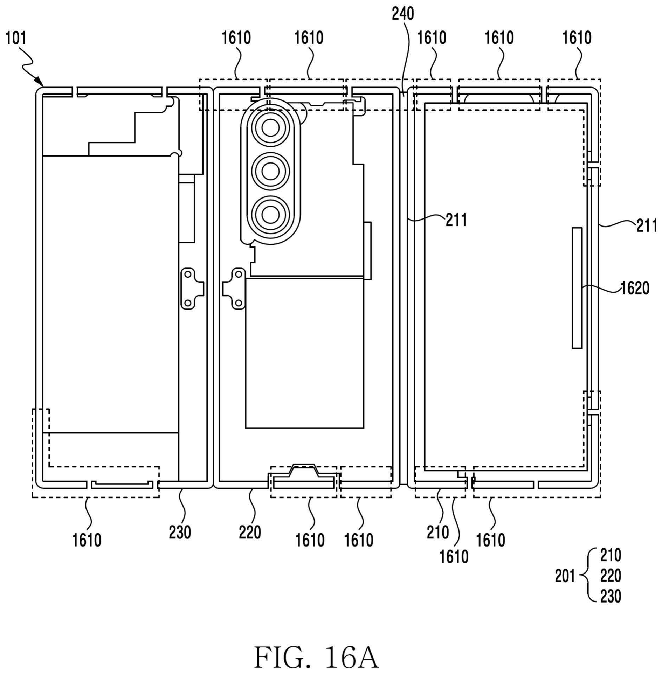

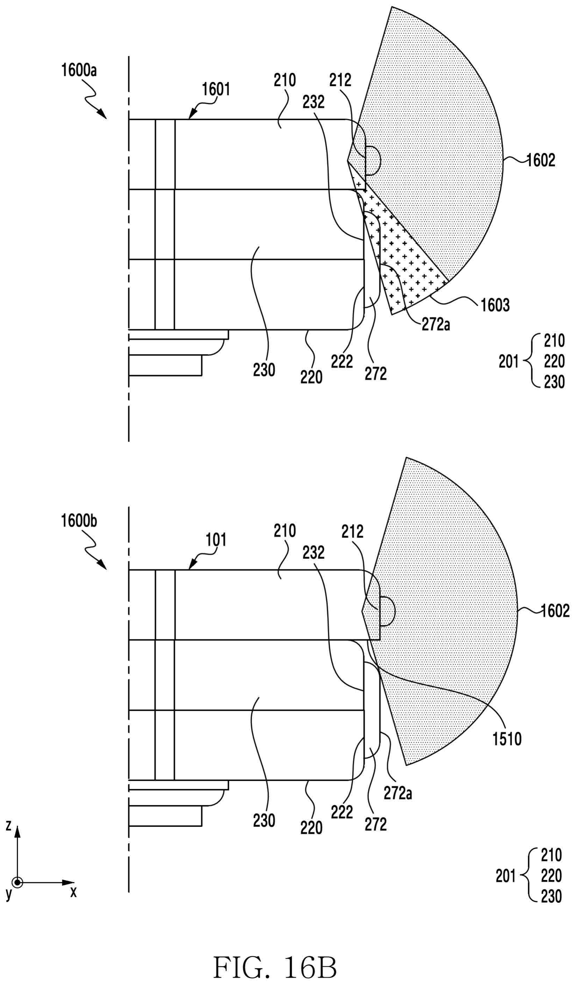

FIG. 16A illustrates a foldable housing of an electronic device according to an embodiment. FIG. 16B is a diagram illustrating radiation performance of an antenna of an electronic device, according to a width of a first housing.

Referring to FIG. 16A, a foldable housing 201 may include a plurality of conductive portions 1610 formed on a lateral side. For example, the plurality of conductive portions 1610 may be formed along at least a portion of a lateral side of the foldable housing 201. For example, the plurality of conductive portions 1610 may be formed along at least a portion of a lateral side of the first housing 210. The plurality of conductive portions 1610 may be separated from each other.

As the plurality of conductive portions 1610 are fed from a wireless communication module (e.g., the wireless communication module 192 of FIG. 1), it may operate as an antenna radiator for radiating a signal. For example, the wireless communication module 192 may communicate with an external electronic device, by using at least a portion of the plurality of conductive portions 1610. The plurality of conductive portions 1610 operating as an antenna radiator may include a feeding point at which a feeding signal is provided and a ground point electrically connected to the ground.

The electronic device 101 according to an embodiment may include an antenna module 1620 used for communication with an external electronic device. For example, the antenna module 1620 may include a millimeter wave (mmWave) antenna module used for 5G communication, but is not limited thereto. For example, the antenna module 1620 may be disposed in the first housing 210. For example, in an unfolded state, the antenna module 1620 may be disposed close to the second lateral side 212 of the first housing 210 opposite to the first lateral side 211 of the first housing 210 adjacent to the first hinge assembly 240. In the folded state, since the second lateral side 212 is exposed toward the outside of the electronic device 101, the antenna module 1620 may be disposed close to the second lateral side 212 to radiate or receive a signal not only in the unfolded state but also in the folded state. The antenna module 1620 may be disposed toward the second lateral side 212 to radiate a signal toward the second lateral side 212.

Referring to FIG. 16B, as a first width (e.g., the first width W1 of FIG. 11) of the first housing 210 is formed to be wider than a second width (e.g., the second width W2 of FIG. 11) of the second housing 220 and a third width (e.g., the third width W3 of FIG. 11) of the third housing 230, the radiation performance of the antenna of the electronic device 101 may be improved.

The 1600a of FIG. 16b represents the electronic device 1601 according to a comparative example having a structure in which the first width W1 of the first housing 210 is not wider than the second width W2 of the second housing 220 and the third width W3 of the third housing 230. In the electronic device 1601 according to the comparative example, since the first width W1 is not wider than the second width W2 and the third width W3, the second lateral side 212 of the first housing 210 may be located inward (e.g., in the -x direction) more than the outer surface 272a of the second hinge cover 272 in the folded state. In the case of the electronic device 1601 according to the comparative example, the step 1510 may not be substantially formed.

An antenna including a plurality of conductive portions (e.g., the plurality of conductive portions 1610 of FIG. 16A) formed in the second lateral side 212 and/or an antenna module (e.g., the antenna module 1620 of FIG. 16A) disposed close to the second lateral side 212 may radiate electromagnetic wave through the second lateral side 212. The antenna including the plurality of conductive portions 1610 and/or the antenna module 1620 may transmit or receive a signal through the electromagnetic wave. In the case of the electronic device 1601 according to a comparative example, since the second lateral side 212 is located inside more than the outer surface 272a of the second hinge cover 272, corners of the second hinge cover 272 and/or the third housing 230 may overlap a portion 1603 of a radiation area 1602 of the electromagnetic wave. The portion 1603 of the radiation area 1602 of the electromagnetic wave overlapping corners of the second hinge cover 272 and/or the third housing 230 is shielded by the corners of the second hinge cover 272 and/or the third housing 230, it may be difficult to transmit and/or receive a signal through the portion 1603 of the radiation area 1602 of the electromagnetic wave. The radiation area 1602 of the electromagnetic wave of the antenna including the plurality of conductive portions 1610 and/or the antenna module 1620 may be substantially reduced by the corners of the second hinge cover 272 and/or the third housing 230. As the radiation area 1602 capable of transmitting and/or receiving a signal is reduced, the communication performance of the electronic device 1601 according to the comparative example may deteriorate.

The 1600b of FIG. 16B represents the electronic device 101 according to an embodiment having a structure in which a first width (e.g., the first width W1 of FIG. 11) of the first housing 210 is wider than a second width (e.g., the second width W2 of FIG. 11) of the second housing 220 and a third width (e.g., the third width W3 of FIG. 11) of the third housing 230. As described above, the step 1510 may be formed between the first housing 210 and the second hinge cover 272.

In the electronic device 101 according to an embodiment, since the first width W1 is wider than the second width W2 and the third width W3, the second lateral side 212 of the first housing 210 may be located outside (e.g., in the +x direction) more than the outer surface 272a of the second hinge cover 272 in the folded state. As the step 1510 is formed, the radiation area 1602 may not be shielded by the corner of the second hinge cover 272 and/or the third housing 230, or a shielded portion may be reduced.

According to an embodiment, the antenna including the plurality of conductive portions 1610 formed in the second lateral side 212 and/or the antenna module 1620 disposed close to the second lateral side 212 may radiate electromagnetic wave through the second lateral side 212. The antenna including the plurality of conductive portions 1610 and/or the antenna module 1620 may transmit or receive a signal through the electromagnetic wave. In the case of the electronic device 101 according to an embodiment, since the second lateral side 212 is located outside more than the outer surface 272a of the second hinge cover 272, the radiation area 1602 of the electromagnetic wave may not be covered by the corner of the second hinge cover 272 and/or the third housing 230. Since the radiation area 1602 of the electromagnetic wave of the antenna including the plurality of conductive portions 1610 and/or the antenna module 1620 is not covered by the corner of the second hinge cover 272 and/or the third housing 230, the electronic device 101 according to an embodiment may have improved communication performance compared to the electronic device 1601 according to the comparative example.

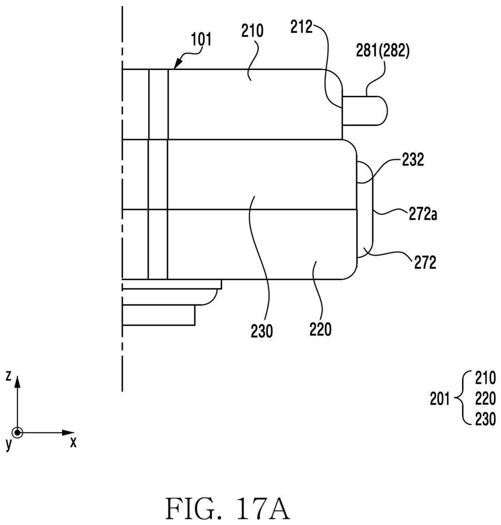

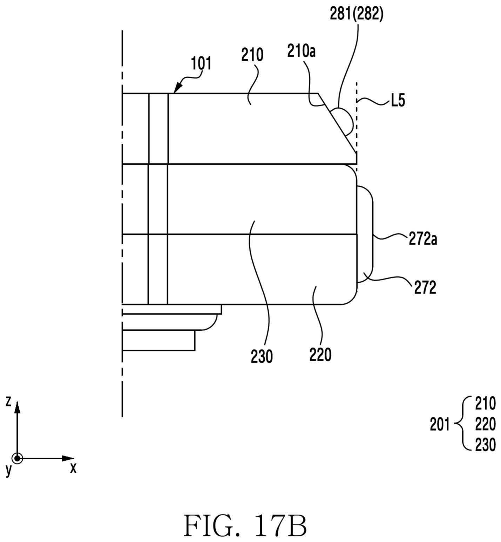

FIGS. 17A and 17B illustrate an electronic device according to an embodiment for improving usability of at least one key button or a fingerprint recognition part.

As described above, when the second lateral side 212 of the first housing 210 is located inward (e.g., in -x direction) more than the outer surface 272a of the second hinge cover 272, usability for at least one key button 281 and/or fingerprint recognition part 282 may be weakened. When the electronic device 101 according to an embodiment includes the foldable housing 201 having a structure in which the second lateral side 212 is located inside more than the outer surface 272a of the second hinge cover 272, the foldable housing 201 may have a structure illustrated in FIG. 17A or 17B, in order to enhance usability of the at least one key button 281 and/or the fingerprint recognition part 282.

Referring to FIG. 17A, a size in which the at least one key button 281 and/or the fingerprint recognition part 282 is exposed through the second lateral side 212 of the first housing 210 may be increased. For example, as the at least one key button 281 and/or the fingerprint recognition part 282 is additionally extended toward the second hinge cover 272 (e.g., +x direction), the at least one key button 281 and/or the fingerprint recognition part 282 may be located outside (e.g., in the +x direction) more than the outer surface 272a of the second hinge cover 272. For example, the at least one key button 281 and/or the fingerprint recognition part 282 may protrude more than the outer surface 272a of the second hinge cover 272 in the folded state. In case that the electronic device 101 according to an embodiment include the foldable housing 201 having the structure, even when the second lateral side 212 is located inside more than the outer surface 272a of the second hinge cover 272, the at least one key button 281 and/or the fingerprint recognition part 282 may be located at least partially outside relative to the outer surface 272a of the second hinge cover 272. As the at least one key button 281 and/or the fingerprint recognition part 282 is located at least partially outside relative to the outer surface 272a of the second hinge cover 272, the user may easily press the at least one key button 281 and/or the fingerprint recognition part 282. According to an embodiment, since the at least one key button 281 and/or the fingerprint recognition part 282 may be easily pressed, the usability of the at least one key button 281 and/or the fingerprint recognition part 282 may be improved.

Referring to FIG. 17B, the second lateral side 212 of the first housing 210 may include a groove 210a. For example, the groove 210a may be referred to as a chamfer portion in terms of a portion of the first housing 210 being removed. Since the second lateral side 212 to which the at least one key button 281 and/or the fingerprint recognition part 282 is exposed has a slope with respect to a virtual line L5 aligned with the sixth lateral side 232 of the third housing 230, it may be formed. The at least one key button 281 and/or the fingerprint recognition part 282 may be exposed to the outside of the first housing 210 through the groove 210a. As the groove 210a is inclined, the user may easily press the at least one key button 281 and/or the fingerprint recognition part 282. For example, when the user presses the at least one key button 281 and/or the fingerprint recognition part 282, the at least one key button 281 and/or the fingerprint recognition part 282 may be pressed without being interfered with the second hinge cover 272. According to an embodiment, since the at least one key button 281 and/or the fingerprint recognition part 282 may be easily pressed, the usability of the at least one key button 281 and/or the fingerprint recognition part 282 may be improved.

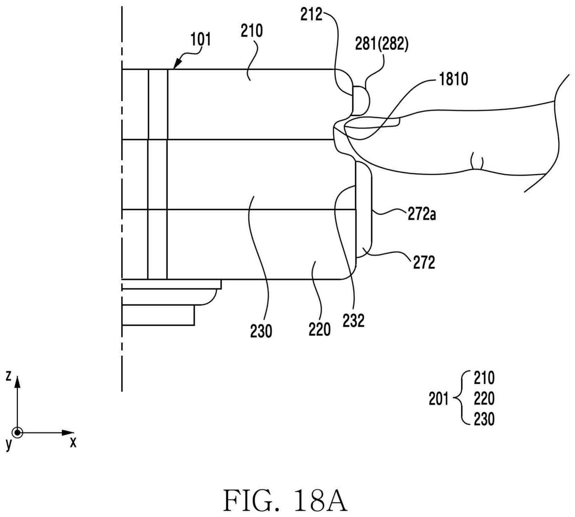

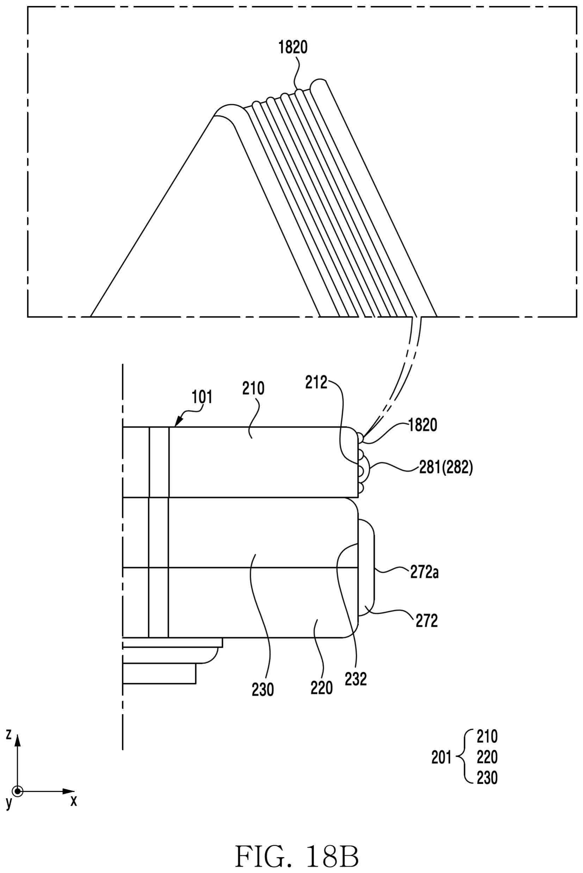

FIGS. 18A and 18B illustrate an electronic device according to an embodiment for improving ease of an unfolding operation.

As described above, when the second lateral side 212 of the first housing 210 is located inside (e.g., in the -x direction) more than the outer surface 272a of the second hinge cover 272, an unfolding operation of the first housing 210 may be difficult. When the electronic device 101 according to an embodiment includes a foldable housing 201 having a structure in which the second lateral side 212 is located inside more than the outer surface 272a of the second hinge cover 272, the foldable housing 201 may have a structure illustrated in FIG. 18A or 18B, in order to enhance ease of unfolding operation.

Referring to FIG. 18A, the second lateral side 212 of the first housing 210 and the sixth lateral side 232 of the third housing 230 may include a recessed portion 1810 recessed inward (e.g., in the -x direction). The recessed portion 1810 may be formed in a portion of the foldable housing 201 in which the first housing 210 and the third housing 230 are in contact with each other. As the recessed portion 1810 is formed, a step in which the user's finger may be placed may be formed between the first housing 210 and the third housing 230. When the recessed portion 1810 is not formed, since the second lateral side 212 and the sixth lateral side 232 are substantially aligned, it may be difficult for the user to provide an external force for unfolding the first housing 210 to the first housing 210. When the recessed portion 1810 is formed, since a step where the user's finger may be placed is formed between the second lateral side 212 and the sixth lateral side 232, the user may place a finger on the recessed 1810 and apply an external force in a direction in which the first housing 210 is unfolded, in order to unfolding the first housing 210. According to an embodiment, ease of unfolding the first housing 210 may be improved by the recessed portion 1810.

Referring to FIG. 18B, the second lateral side 212 of the first housing 210 may include a protrusion 1120. For example, the protrusion 1820 may protrude outward (e.g., in the +x direction) from the second lateral side 212. Due to the protrusion 1820, the second lateral side 212 may not be flat but uneven. The user may unfold the first housing 210 by applying an external force to the protrusion 1820 with a finger. When the second lateral side 212 is flat, as applying frictional force between the user's finger and the second lateral side 212 is difficult, it may be difficult to unfold the first housing 210. When the second lateral side 212 includes the protrusion 1820, the frictional force may be easily applied between the user's finger and the second lateral side 212 by the protrusion 1820, and thus the first housing 210 may be easily unfolded. According to an embodiment, the ease of unfolding the first housing 210 may be improved by the protrusion 1820.

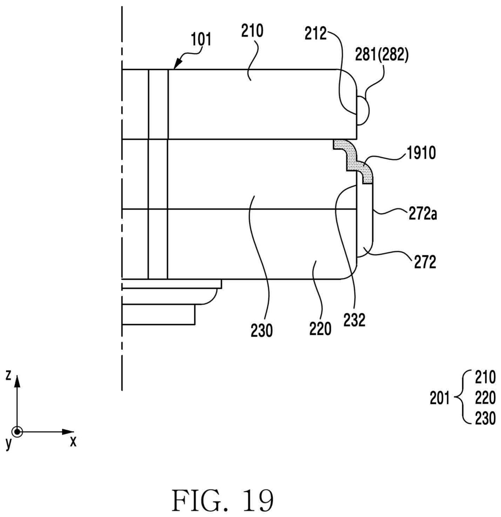

FIG. 19 illustrates an electronic device according to an embodiment for improving radiation performance of an antenna of an electronic device.

As described above, when the second lateral side 212 of the first housing 210 is located inside (e.g., in the -x direction) more than the outer surface 272a of the second hinge cover 272, as a radiation area is covered by the outer surface 272a of the second hinge cover 272, the communication performance may be deteriorated. When the electronic device 101 according to an embodiment includes the foldable housing 201 having a structure in which the second lateral side 212 is located inside more than the outer surface 272a of the second hinge cover 272, the electronic device 101 may include a non-conductive portion 1910 in which at least a portion of a corner of the third housing 230 and/or the second hinge cover 272 is formed of a non-conductive material, in order to enhance the communication performance.

For example, electromagnetic waves radiated from an antenna including a plurality of conductive portions (e.g., the plurality of conductive portions 1610 of FIG. 16A) and/or an antenna module (e.g., the antenna modules 1620 of FIG. 16A) may be covered by a conductive material (e.g., metal). The electromagnetic wave may not be electromagnetically affected by a non-conductive material. When at least a portion of the corner of the third housing 230 and/or the outer surface 272a of the second hinge cover 272, which overlaps with a radiation area from which the electromagnetic waves are radiated, is formed of a non-conductive material (e.g., polymer), the electromagnetic wave may be radiated without being covered by the corner of the third housing 230 and/or the second hinge cover 272. In order to overcome the deterioration of communication performance due to the reduction in the radiation area, the corner of the third housing 230 and/or the second hinge cover 272 may include the non-conductive portion 1910 formed of a non-conductive material not electromagnetically affecting on the electromagnetic wave. In case that the corner of the third housing 230 and/or the second hinge cover 272 includes a non-conductive portion 1910 formed of a non-conductive material, as the radiation area may not be limited even when the second hinge cover 272 and the third housing 230 overlap the radiation area, the communication performance of the electronic device 101 may be improved.

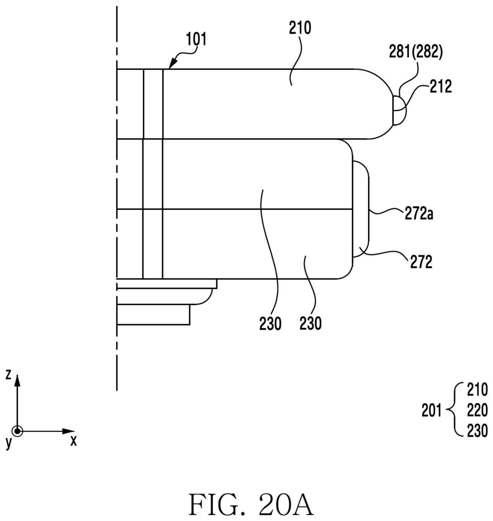

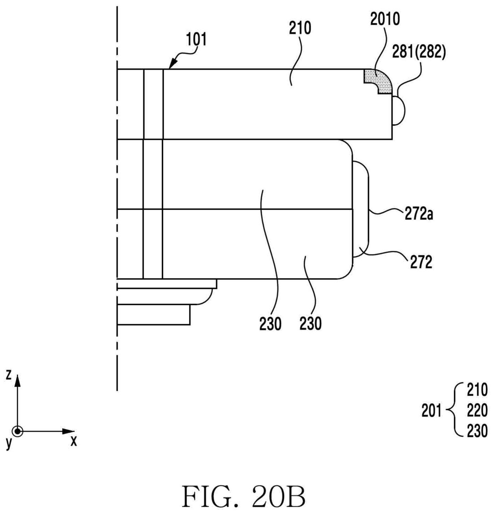

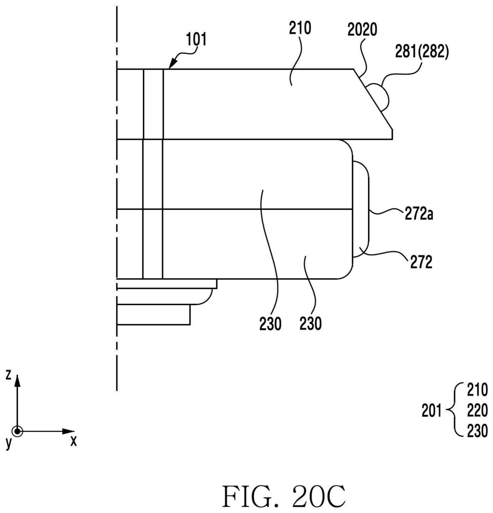

FIGS. 20A, 20B, and 20C illustrate an electronic device according to an embodiment for improving radiation performance of an antenna of an electronic device.

As described above, the second lateral side 212 of the first housing 210 may be substantially aligned with the outer surface 272a of the second hinge cover 272. When the second lateral side 212 is not substantially aligned with the outer surface 272a of the second hinge cover 272 and is located outward (e.g., in the +x direction) the outer surface 272a of the second hinge cover 272, the first housing 210 may be easily damaged by impact. When the electronic device 101 according to an embodiment include the foldable housing 201 having a structure in which the second lateral side 212 is located outward the outer surface 272a of the second hinge cover 272, the foldable housing 201 may have a structure illustrated in FIG. 20A, 20B, or 20C, in order to reduce the damage.

Referring to FIG. 20A, a corner of the first housing 210 protruding outward from the outer surface 272a of the second hinge cover 272 may be rounded. For example, the corner of the first housing 210 may mitigate the impact, by having a gradually rounded shape. When the corner of the first housing 210 is substantially angled, the corner may be easily damaged by impact. In a case that the corner of the first housing 210 is rounded as illustrated in FIG. 20A, since the impact may be alleviated even when an impact is applied to the first housing 210, damage to the first housing 210 may be reduced.

Referring to FIG. 20B, the corner of the first housing 210 protruding outward from the outer surface 272a of the second hinge cover 272 may include a portion 2010 including a material having elasticity. For example, the portion 2010 may include silicon having elasticity, but is not limited thereto. When the corner includes the portion 2010 including an elastic material, since the impact may be absorbed by the elastic material, damage to the first housing 210 may be reduced.

Referring to FIG. 20C, the first housing 210 protruding outward from the outer surface 272a of the second hinge cover 272 may include a groove 2020 (or a chamfer portion). Since the groove 2020 may change the outline of the foldable housing 201 from an angular shape to a gradual shape, damage to the first housing 210 due to impact may be reduced.

FIG. 21 illustrates an electronic device according to an embodiment in an unfolded state.

Referring to FIG. 21, the first thickness T1 of the first housing 210, the second thickness T2 of the second housing 220, and the third thickness T3 of the third housing 230 may not be the same and may be different. For example, the second thickness T2 may be thinner than the first thickness T1 and the third thickness T3.

For example, the electronic device 101 may include cameras 283. For example, the cameras 283 may be disposed inside the second housing 220 located between the first housing 210 and the third housing 230 in the unfolded state. In the folded state, since a rear surface of the second housing 220 may be exposed to the outside so that the cameras 283 may be used in the folded state, the cameras 283 may obtain light radiated from a subject by being aligned with an opening in the rear surface of the second housing 220.

The electronic device 101 according to an embodiment may include a camera deco 2110 that at least partially surrounds the cameras 283. The camera deco 2110 may protect the cameras 283 from impact by surrounding the cameras 283. The camera deco 2110 may be at least partially exposed through the rear surface of the second housing 220. When the first thickness T1, the second thickness T2, and the third thickness T3 are substantially the same, since the camera deco 2110 is at least partially exposed through the rear surface of the second housing 220, the rear surface of the foldable housing 201 may not be flat. Due to a thickness of the camera deco 2110 exposed to the rear surface of the second housing 220, the foldable housing 201 may not be stably placed on a flat surface and may be inclined. For example, in case that the first thickness T1, the second thickness T2, and the third thickness T3 are substantially the same, when the foldable housing 201 is placed on a floor surface, the protruding camera deco 2110 may touch the floor surface, and a rear surface of the foldable housing 201 may be spaced apart from the floor surface. Since the rear surface of the foldable housing 201 does not touch the floor surface, the foldable housing 201 may be inclined.

According to an embodiment, the second thickness T2 may be thinner than the first thickness T1 and the third thickness T3 so that the foldable housing 201 in the unfolded state may be stably supported on the floor surface. A thickness T5 of the camera deco 2110 exposed to the rear surface of the second housing 220 may correspond to a difference between the first thickness T1 (or the third thickness T3) and the second thickness T2 so that the foldable housing 201 may be stably supported, in the unfolded state. In the case of the foldable housing 201 having the above structure, in the unfolded state, since the camera deco 2110, the rear surface of the first housing 210, and the rear surface of the third housing 230 may touch the floor surface, the electronic device 101 may be stably supported.

An electronic device 101 is provided. The electronic device 101 may include a foldable housing 201 including a first housing 210, a second housing 220, and a third housing 230. The electronic device 101 may include a flexible display 260 supported by the first housing 210, the second housing 220, and the third housing 230. The electronic device 101 may include a first hinge assembly 240 rotatably connecting the first housing 210 and the second housing 220. The electronic device 101 may include a second hinge assembly 250 rotatably connecting the second housing 220 and the third housing 230. The electronic device 101 may include a first hinge cover 271 surrounding the first hinge assembly 240. The electronic device 101 may include a second hinge cover 272 surrounding the second hinge assembly 250. When the electronic device 101 is in a folded state, a step 1510 may be formed between the first housing 210 and the second hinge cover 272.

For example, a second width W2 of the second housing 220 may be narrower than a first width W1 of the first housing 210, and wider than a third width W3 of the third housing 230.

For example, a fourth width W4 of the first hinge cover 271 may be wider than a fifth width W5 of the second hinge cover 272.

For example, a second thickness T2 of the second housing 220 may be thinner than a first thickness T1 of the first housing 210 and a third thickness T3 of the third housing 230.

For example, when the foldable housing 201 is in the folded state, the third housing 230 may be positioned between the first housing 210 and the second housing 220. When the foldable housing 201 is in the folded state, the first hinge cover 271 may be opposite to the second hinge cover 272 with the foldable housing 201 therebetween. When the foldable housing 201 is in the folded state, a lateral side 231 of the third housing 230 facing the first hinge cover 271 may be spaced apart from a virtual line L1 extending from a lateral side 211 of the first housing 210 adjacent to the first hinge cover 271 to a lateral side 221 of the second housing 220 adjacent to the first hinge cover 271, toward the second hinge cover 272.

For example, when the electronic device is in the folded state, the flexible display 260 may include a first area 430 disposed on the first housing 210, a second area 440 disposed on the second housing 220, a third area 450 disposed on the third housing 230, a first deformable area 410 that is bent between the first area 430 and the second area 440, and a second deformable area 420 that is bent between the second area 440 and the third area 450. The first deformable area 410 may include a flat portion (e.g., the first flat portion 411) perpendicular to the first housing 210 and the second housing 220, a first bent portion 412 bent from a first end 412a of the flat portion 513 to a second end 412b of the first area 430, and a second bent portion 413 bent from a third end 413a of the flat portion 411 opposite to the first end 412a to a fourth end 413b of the second area 440.

An electronic device 101 is provided. The electronic device 101 may include a foldable housing 201 including a first housing 210 having a first width W1, a second housing 220 having a second width W2 narrower than the first width W1, and a third housing 230 having a third width W3 narrower than the second width W2. The electronic device 101 may include a flexible display 260 supported by the first housing 210, the second housing 220, and the third housing 230. The electronic device 101 may include a first hinge assembly 240 rotatably connecting the first housing 210 and the second housing 220. The electronic device 101 may include a second hinge assembly 250 rotatably connecting the second housing 220 and the third housing 230. The electronic device 101 may include a first hinge cover 271 having a fourth width W4 and surrounding the first hinge assembly 240. The electronic device 101 may include a second hinge cover 272 having a fifth width W5 narrower than the fourth width W4 and surrounding the second hinge assembly 250.

For example, a second thickness T2 of the second housing 220 may be thinner than a first thickness T1 of the first housing 210 and a third thickness T3 of the third housing 230.

For example, the electronic device 101 may further include a camera deco 2110 that at least partially surrounds a camera disposed within the second housing 220 and is at least partially protruded from a rear surface of the second housing 220. A thickness of the camera deco 2110 protruded from the rear surface may substantially correspond to a difference between the third thickness T3 and the second thickness T2.

For example, when the electronic device 101 is in the folded state, the third housing 230 may be positioned between the first housing 210 and the second housing 220. When the electronic device 101 is in the folded state, the first hinge cover 271 may be opposite to the second hinge cover 272 so that at least a portion of the foldable housing 201 is positioned between the first hinge cover 271 and the second hinge cover 272. When the electronic device 101 is in the folded state, a lateral side (e.g., the fifth lateral side 231) of the third housing 230 facing the first hinge cover 271 may be spaced apart from a first virtual line L1, extending from a lateral side (e.g., the first lateral side 211) of the first housing 210 adjacent to the first hinge cover 271 to a lateral side (e.g., the third lateral side 221) of the second housing 220 adjacent to the first hinge cover 271, toward the second hinge cover 272.

For example, the folded state may include a first folded state in which the third housing 230 is folded with respect to the second housing 220, and a second folded state, in the first folded state, in which the first housing 210 is folded (with respect to the second housing 220). The first folded state and the second folded state may be a state in which (the third housing 230 and the first housing 210 are) inwardly folded with respect to the flexible display 260.

For example, a second virtual straight line L2, extending from a lateral side (e.g., the fourth lateral side 222) of the second housing 220 adjacent to the second hinge cover 272 to a lateral side (e.g., the sixth lateral side 232) of the third housing 230 adjacent to the second hinge cover 272 may be spaced apart from a third virtual straight line L3 extending from an outer surface 272a of the second hinge cover 272, by 1.5 mm to 2.0 mm.

For example, when the electronic device is in the folded state, another lateral side (e.g., the second lateral side 212) of the first housing 210 opposite to the lateral side 211 of the first housing 210 adjacent to the first hinge cover 271 may be substantially aligned with an outer surface 272a of the second hinge cover 272.

For example, when the electronic device is in the folded state, the flexible display 260 may include a first area 430 disposed on the first housing 210, a second area 440 disposed on the second housing 220, a third area 450 disposed on the third housing 230, a first deformable area 410 that is at least partially bent between the first area 430 and the second area 440, and a second deformable area 420 that is at least partially bent between the second area 440 and the third area 450.

The first deformable area 410 may include a flat portion (e.g., the first flat portion 411) substantially perpendicular to the first housing 210 and the second housing 220, a first bent portion 412 bent from a first end 412a of the flat portion 513 to a second end 412b of the first area 430, and a second bent portion 413 bent from a third end 413a of the flat portion 411 opposite to the first end 412a to a fourth end 413b of the second area 440.

For example, when the electronic device is in the folded state, a lateral side 231 of the third housing 230 facing the first hinge cover 271 may be spaced apart from a virtual line L4 extending from the second end 511b to the fourth end 512b, toward the second hinge cover 272.

For example, when the electronic device is in the folded state, a portion of the lateral side 231 of the third housing 230 facing the first hinge cover 271 may be spaced apart from a fourth virtual line L4 extending from the second end 511b to the fourth end 512b, toward the first hinge cover 271.

For example, a curvature of the lateral side 231 of the third housing 230 may be greater than a curvature of the first bent portion 412 and a curvature of the second bent portion 413.

For example, the electronic device 101 may further include at least one of at least one key button 281 or a fingerprint recognition portion 283 exposed through another lateral side 212 of the first housing 210 opposite to a lateral side 211 of the first housing 210 adjacent to the first hinge assembly 240.

For example, the other lateral side 212 of the first housing 210 may include at least one of a groove 1320 or a protrusion 1120 formed on the other lateral side 212.

For example, when the electronic device 101 is in the folded state, a step 1510 may be formed between the first housing 210 and the second hinge cover 272.

For example, when the electronic device 101 is in the folded state, the first hinge cover 271 may be protruded from the lateral side 211 of the first housing 210 adjacent to the first hinge cover 271 and the lateral side 221 of the second housing 220 adjacent to the first hinge cover 271.

For example, when the electronic device 101 is in the folded state, the second hinge cover 272 may be protruded from the lateral side 222 of the second housing 220 adjacent to the second hinge cover 272 and the lateral side 232 of the third housing 230 adjacent to the second hinge cover 272.

For example, the lateral side 231 of the third housing 230 may be at least partially rounded.

For example, the electronic device 101 may include a plurality of conductive portions 910, formed along at least a portion of a lateral side of the first housing 210, used for communication with an external electronic device. The electronic device 101 may include an antenna module 1620 disposed close to another lateral side of the first housing 210 opposite to a lateral side of the first housing 210 adjacent to the first hinge assembly 240. When the electronic device 101 is in the folded state, the first housing 210 may be protruded from the lateral side 222 of the second housing 220 adjacent to the second hinge cover 272 and the lateral side 232 of the third housing 230.

For example, a thickness of the foldable housing 201 may be thicker than a thickness of the first hinge cover 271 and a thickness of the second hinge cover 272.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a foldable housing including:
a first housing having a first width,
a second housing having a second width narrower than the first width, and
a third housing having a third width narrower than the second width;
a flexible display supported by the first housing, the second housing, and the third housing;
a first hinge assembly rotatably connecting the first housing and the second housing to each other;
a second hinge assembly rotatably connecting the second housing and the third housing to each other;
a first hinge cover, having a fourth width, at least partially covering the first hinge assembly; and
a second hinge cover, having a fifth width narrower than the fourth width, at least partially covering the second hinge assembly.

2. The electronic device of claim 1,
wherein a second thickness of the second housing is thinner than a first thickness of the first housing and a third thickness of the third housing.

3. The electronic device of claim 2, further comprising a camera deco, at least partially surrounding a camera disposed within the second housing, at least partially protruded from a rear side of the second housing, and
wherein a thickness of the camera deco protruded from the rear side substantially corresponds to a difference between the third thickness and the second thickness.

4. The electronic device of any one of claims 1 to 3,
wherein, when the electronic device is in a folded state, the third housing is positioned between the first housing and the second housing,
wherein, when the electronic device is in the folded state, the first hinge cover is opposite to the second hinge cover such that at least a portion of the foldable housing is positioned between the first hinge cover and the second hinge cover, and
wherein, when the electronic device is in the folded state, a lateral side of the third housing facing the first hinge cover is spaced apart from a first virtual straight line, extending from a lateral side of the first housing adjacent to the first hinge cover to a lateral side of the second housing adjacent to the first hinge cover, toward the second hinge cover.

5. The electronic device of claim 4,
wherein the folded state includes:
a first folded state in which the third housing is folded with respect to the second housing, and
a second folded state, in the first folded state, in which the first housing is folded (with respect to the second housing part), and
wherein the first folded state and the second folded state are a state in which (the third housing part and the first housing part are) inwardly folded with respect to the flexible display.

6. The electronic device of any one of claims 1 to 5,
wherein a second virtual straight line, extending from a lateral side of the second housing adjacent to the second hinge cover to a lateral side of the third housing adjacent to the second hinge cover, is spaced apart from a third virtual straight line, extending from an outer surface of the second hinge cover, by 1.5 mm to 2.0 mm.

7. The electronic device of any one of claims 1 to 6,
wherein, when the electronic device is in a folded state, another lateral side of the first housing opposite a lateral side of the first housing adjacent to the first hinge cover is substantially aligned with an outer surface of the second hinge cover.

8. The electronic device of any one of claims 1 to 7,
wherein, when the electronic device is in a folded state, the flexible display includes:
a first area disposed on the first housing,
a second area disposed on the second housing,
a third area disposed on the third housing,
a first deformable area at least partially curved between the first area and the second area, and
a second deformable area at least partially curved between the second area and the third area,
wherein the first deformable area includes:
a flat portion perpendicular to the first housing and the second housing,
a first curved portion curved from a first end of the flat portion to a second end of the first area, and
a second curved portion curved from a third end of the flat portion to a fourth end of the second area.

9. The electronic device of claim 8,
wherein, when the electronic device is in the folded state, a lateral side of the third housing facing the first hinge cover is spaced apart from a virtual straight line, extending from the second end to the fourth end, toward the second hinge cover.

10. The electronic device of claim 8,
wherein, when the electronic device is in the folded state, a portion of a lateral side of the third housing facing the first hinge cover is spaced apart from a fourth virtual straight line, extending from the second end to the fourth end, toward the first hinge cover.

11. The electronic device of claim 10,
wherein a curvature of the lateral side of the third housing is greater than a curvature of the first curved portion and the second curved portion.

12. The electronic device of any one of claims 1 to 11, further comprising at least one key button or a fingerprint recognition portion exposed through another lateral side of the first housing opposite a lateral side of the first housing adjacent to the first hinge assembly.

13. The electronic device of claim 12,
wherein the other lateral side of the first housing includes at least one of a groove or a protrusion formed on the other lateral side of the first housing.

14. The electronic device of claim 12,
wherein, when the electronic device is in a folded state, the at least one key button or the fingerprint recognition portion protrude beyond the second hinge cover.

15. The electronic device of any one of claims 1 to 14,
wherein, when the electronic device is in a folded state, a step is formed on a lateral side of the first housing, and is positioned to adjacent the second hinge cover.
